# EUROPEAN PATENT SPECIFICATION

(11) **EP 4 330 912 B1**
(45) Date of publication and mention of the grant of the patent: **24.09.2025**
(21) Application number: 22863479.6
(22) Date of filing: 30.08.2022
(51) Int. Cl.: G06T 7/20, G06T 7/00, G06T 5/50

(54) **SYSTEMS AND METHODS FOR MEDICAL IMAGE PROCESSING**
SYSTEME UND VERFAHREN ZUR VERARBEITUNG MEDIZINISCHER BILDER
SYSTÈMES ET PROCÉDÉS DE TRAITEMENT D'IMAGE MÉDICALE

(30) Priority: 30.08.2021 CN 202111004733; 28.10.2021 CN 202111266038; 28.12.2021 CN 202111682218
(43) Date of publication of application: 06.03.2024
(73) Proprietor: Shanghai United Imaging Healthcare Co., Ltd., Shanghai 201807 (CN)
(72) Inventor: YUE, Liang, Shanghai 201807 (CN); FENG, Juan, Shanghai 201807 (CN); NIU, Jie, Shanghai 201807 (CN); JIANG, Chunhua, Shanghai 201807 (CN)
(74) Representative: Wang, Bo
(86) International application number: PCT/CN2022/115991
(87) International publication number: WO 2023/030344

(56) References cited:
- CN-A- 101 303 767
- CN-A- 106 803 241
- CN-A- 106 821 404
- CN-A- 106 821 404
- CN-A- 108 830 819
- CN-A- 108 830 819
- CN-A- 113 538 419
- CN-A- 114 037 626
- CN-A- 114 359 037
- US-A1- 2017 347 982
- US-A1- 2018 028 137
- US-B2- 10 258 301
- US-B2- 6 760 401

## Description

### CROSS-REFERENCE TO RELATED APPLICATIONS

This application claims priority to Chinese Patent Application No. 202111004733.9, filed on August 30, 2021, Chinese Patent Application No. 202111266038.X, filed on October 28, 2021, and Chinese Patent Application No. 202111682218.6, filed on December 28, 2021.

### TECHNICAL FIELD

The present disclosure generally relates to medical image processing, and in particular, to systems and methods for image subtracting.

### BACKGROUND

In medical imaging, image subtraction, such as the digital subtraction angiography (DSA) technology, is widely used. In such technologies, sometimes it is necessary to obtain a mask image of an area of interest (AOI) of a patient before the patient is injected with a contrast agent (e.g., iodine), and obtain a contrast image of the AOI after the injection. After the the mask image is subtracted from the contrast image, in theory, a subtracting image that shows the structures (e.g., blood vessels) containing the contrast agent can be obtained. However, it is commonplace that a large number of motion artifacts are still present in the subtracting image due to, change of body position or pose, spontaneous shaking of the body, and/or involuntary movement inside the body (e.g., abdominal breathing and heart beating) during a period between acquiring the contrast image and the mask image. At present, the motion artifacts in the subtracting image can be reduced by pixel displacement of the mask image. However, the effect of simply using pixel displacement to reduce motion artifacts is limited, especially for complex body parts such as the heart. Therefore, it is desirable to provide systems and methods to reduce the motion artifacts in the subtracting image more effectively and/or efficiently. Document US6760401B2 discloses the processing of digitized X-ray images of the coronary blood vessels for the display of image details.

### SUMMARY

According to a first aspect of the present disclosure, a method for medical image processing may be executed by at least one processor. The method may comprise obtaining a contrast image of an object and at least one mask image of the object, extracting a plurality of target structures from the at least one mask image by using one or more preset processing algorithms; and generating a subtracted image by subtracting the plurality of target structures from the contrast image.

According to a second aspect of the present disclosure, a system may include at least one storage device and at least one processor configured to communicate with the at least one storage device. The at least one storage device may include a set of instructions. When the at least one processor executes the set of instructions, the at least one processor may be directed to perform one or more of the following operations. The at least one processor may obtain a contrast image of an object and at least one mask image of the object, extract a plurality of target structures from the at least one mask image by using one or more preset processing algorithms, and generate a subtracted image by subtracting the plurality of target structures from the contrast image .

According to a third aspect of the present disclosure, a computer-readable non-transitory storage medium may store computer instructions. When a computer reads the computer instructions in the non-transitory storage medium, the computer executes a method for medical image processing. The method may comprise obtaining a contrast image of an object and at least one mask image of the object, extracting a plurality of target structures from the at least one mask image by using one or more preset processing algorithms, and generating a subtracted image by subtracting the plurality of target structures from the contrast image.

According to a fourth aspect of the present disclosure, a method for medical image processing may be executed by at least one processor. The method may comprise obtaining a contrast image of an object and a plurality of mask images of the object, selecting at least two mask images from the plurality of mask images based on the contrast image, obtaining one or more high-frequency components and one or more low-frequency components of each of the at least two mask images, generating a combined mask image by fusing a low-frequency component of one image of the at least two mask images and the high-frequency components of the at least two mask images; and generating a subtracted image by subtracting the combined mask image from the contrast image.

According to a fifth aspect of the present disclosure, a system may include at least one storage device and at least one processor configured to communicate with the at least one storage device. The at least one storage device may include a set of instructions. When the at least one processor executes the set of instructions, the at least one processor may be directed to perform one or more of the following operations. The at least one processor may obtain a contrast image of an object and a plurality of mask images of the object, determine at least two mask images from the plurality of mask images based on the contrast image, obtain one or more high-frequency components and one or more low-frequency components of each of the at least two mask images, generate the combined mask image by fusing a low-frequency component of one image of the at least two mask images and the high-frequency components of the at least two mask images, and generate the subtracted image by subtracting the combined mask image from the contrast image.

According to a sixth aspect of the present disclosure, a computer-readable non-transitory storage medium may store computer instructions. When a computer reads the computer instructions in the non-transitory storage medium, the computer executes a method for medical image processing. The method may comprise obtaining a contrast image of an object and a plurality of mask images of the object, determining at least two mask images from the plurality of mask images based on the contrast image, obtaining one or more high-frequency components and one or more low-frequency components of each of the at least two mask images, generating the combined mask image by fusing a low-frequency component of one image of the at least two mask images and the high-frequency components of the at least two mask images, and generating the subtracted image by subtracting the combined mask image from the contrast image.

According to a seventh aspect of the present disclosure, a method for medical image processing may be executed by at least one processor. The method may comprise obtaining a contrast image of an object and at least two mask images of the object, determining a heartbeat status of the object corresponding to each of the at least two mask images and a heartbeat status of the object corresponding to the contrast image, determining, based on the at least two mask images, at least one candidate mask image corresponding to heartbeat status that is the same as or substantially similar to the heartbeat status of the object corresponding to the contrast image, determining a target mask image corresponding to the contrast image based on the at least one candidate mask image, and generating a subtracted image based on the target mask image and the contrast image.

According to a eighth aspect of the present disclosure, a system may include at least one storage device and at least one processor configured to communicate with the at least one storage device. The at least one storage device may include a set of instructions. When the at least one processor executes the set of instructions, the at least one processor may be directed to perform one or more of the following operations. The at least one processor may obtain a contrast image of an object and at least two mask images of the object, determine a heartbeat status of the object corresponding to each of the at least two mask images and a heartbeat status of the object corresponding to the contrast image, determine, based on the at least two mask images, at least one candidate mask image corresponding to heartbeat status that is the same as or substantially similar to the heartbeat status of the object corresponding to the contrast image, determine a target mask image corresponding to the contrast image based on the at least one candidate mask image, and generate the subtracted image based on the target mask image and the contrast image.

According to a ninth aspect of the present disclosure, a computer-readable non-transitory storage medium may store computer instructions. When a computer reads the computer instructions in the non-transitory storage medium, the computer executes a method for medical image processing. The method may comprise obtaining a contrast image of an object and at least two mask images of the object, determining a heartbeat status of the object corresponding to each of the at least two mask images and a heartbeat status of the object corresponding to the contrast image, determining, based on the at least two mask images, at least one candidate mask image corresponding to heartbeat status that is the same as or substantially similar to the heartbeat status of the object corresponding to the contrast image, determining a target mask image corresponding to the contrast image based on the at least one candidate mask image, and generating the subtracted image based on the target mask image and the contrast image.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a schematic diagram illustrating an exemplary imaging system according to some embodiments of the present disclosure;
FIG. 2 is a schematic block diagram illustrating an exemplary processing device according to some embodiments of the present disclosure;
FIG. 3 is a flowchart illustrating an exemplary process for generating a subtracted image by subtracting a plurality of target structures from a contrast image according to some embodiments of the present disclosure;
FIG. 4 is a flowchart illustrating an exemplary process for determining a plurality of target structures according to some embodiments of the present disclosure;
FIG. 5 is a flowchart illustrating an exemplary process for determining a plurality of target structures corresponding to a plurality of structure templates according to some embodiments of the present disclosure;
FIG. 6 is a flowchart illustrating an exemplary process for designating a combined candidate target structure as a target structure corresponding to a structure template according to some embodiments of the present disclosure;
FIG. 7 is a flowchart illustrating an exemplary process for generating a subtracted image by subtracting a combined mask image from a contrast image according to some embodiments of the present disclosure;
FIG. 8 is a flowchart illustrating an exemplary process for generating a combined mask image according to some embodiments of the present disclosure;
FIG. 9 is a flowchart illustrating an exemplary process for generating at least one simulated mask image according to some embodiments of the present disclosure;
FIG. 10 is a flowchart illustrating an exemplary process for generating a combined mask image or a target structure according to some embodiments of the present disclosure;
FIGs. 11A-C are schematic diagrams illustrating a group of exemplary subtracted images according to some embodiments of the present disclosure;
FIGs. 12A-C are schematic diagrams illustrating another group of exemplary subtracted images according to some embodiments of the present disclosure;
FIG. 13 is a flowchart illustrating an exemplary process for generating a subtracted image based on a target mask image and a contrast image according to some embodiments of the present disclosure; and
FIG. 14 is a flowchart illustrating an exemplary process for generating a subtracted image by subtracting a pixel-shifted mask image from a contrast image according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively highlevel, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but to be accorded the widest scope consistent with the claims. The invention is defined by the appended claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that the term "system," "unit," "module," and/or "block" used herein are one method to distinguish different components, elements, parts, section or assembly of different level in ascending order. However, the terms may be displaced by another expression if they achieve the same purpose.

Generally, the word "module," "unit," or "block," as used herein, refers to logic embodied in hardware or firmware, or to a collection of software instructions. A module, a unit, or a block described herein may be implemented as software and/or hardware and may be stored in any type of non-transitory computer-readable medium or another storage device. In some embodiments, a software module/unit/block may be compiled and linked into an executable program. It will be appreciated that software modules can be callable from other modules/units/blocks or from themselves, and/or may be invoked in response to detected events or interrupts. Software modules/units/blocks configured for execution on computing devices may be provided on a computer readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules/units/blocks may be included of connected logic components, such as gates and flip-flops, and/or can be included of programmable units, such as programmable gate arrays or processors. The modules/units/blocks or computing device functionality described herein may be implemented as software modules/units/blocks, but may be represented in hardware or firmware. In general, the modules/units/blocks described herein refer to logical modules/units/blocks that may be combined with other modules/units/blocks or divided into sub-modules/sub-units/sub-blocks despite their physical organization or storage.

It will be understood that when a unit, engine, module or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

Provided herein are systems and components for medical imaging and/or medical treatment. In some embodiments, the medical system may include an imaging system. The imaging system may include a single modality imaging system and/or a multi-modality imaging system. The single modality imaging system may include, for example, an X-ray imaging system (e.g,. a computed tomography (CT) imaging system, a digital subtraction angiography (DSA) imaging system, a digital radiology (DR) imaging system, a computed radiology (CR) imaging system, etc.), an ultrasound imaging system (e.g., a color Doppler flow imaging (CDFI) system), a magnetic resonance imaging (MRI) system, or a nuclear medical imaging system (e.g., a positron emission tomography (PET) imaging system, a single photon emission computed tomography (SPECT) imaging system, etc.). The multi-modality imaging system may include, for example, a computed tomography-magnetic resonance imaging (MRI-CT) system, a positron emission tomography-magnetic resonance imaging (PET-MRI) system, a single photon emission computed tomography-magnetic resonance imaging (SPECT-MRI) system, a digital subtraction angiography-magnetic resonance imaging (DSA-MRI) system, a positron emission tomography-magnetic resonance imaging-computed tomography (PET-CT) imaging system,etc. In some embodiments, the medical system may include a treatment system. The treatment system may include a treatment plan system (TPS), image-guide radiotherapy (IGRT), etc. The image-guide radiotherapy (IGRT) may include a treatment device and an imaging device. The treatment device may include a linear accelerator, a cyclotron, a synchrotron, etc., configured to perform a radio therapy on a subject. The treatment device may include an accelerator of species of particles including, for example, photons, electrons, protons, or heavy ions. The imaging device may include an MRI scanner, a CT scanner (e.g., cone beam computed tomography (CBCT) scanner), a digital radiology (DR) scanner, an electronic portal imaging device (EPID), etc.

In some embodiments, the systems provided herein may be used for medical diagnosis, for example, red blood cell and white blood cell differential diagnosis, chromosome analysis, cancer cell recognition diagnosis, bone and joint soft tissue diagnosis, intracerebral hematoma, extracerebral hematoma, brain tumors, intracranial aneurysms, arteriovenous malformations, cerebral ischemia, intraspinal tumors, syringomyelia and hydrocephalus diagnosis, lumbar disc herniation, diagnosis of primary liver cancer, etc.

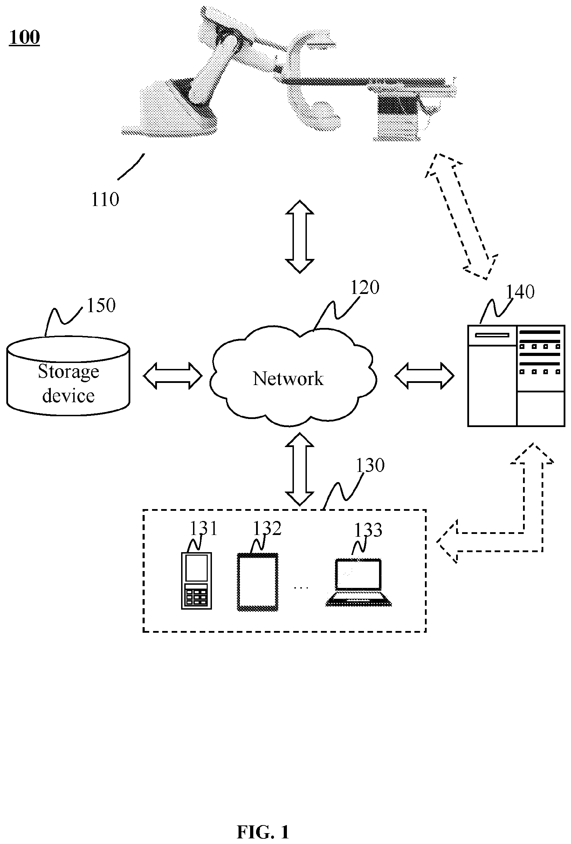

FIG. 1 is a schematic diagram illustrating an exemplary imaging system 100 according to some embodiments of the present disclosure. As illustrated, the imaging system 100 may include an imaging device 110, a network 120, a terminal 130, a processing device 140, and a storage device 150. The components of the imaging system 100 may be connected in one or more of various ways. Mere by way of example, as illustrated in FIG. 1, the imaging device 110 may be connected to the processing device 140 through the network 120. As another example, the imaging device 110 may be connected to the processing device 140 directly (as indicated by the bi-directional arrow in dotted lines linking the imaging device 110 and the processing device 140). As a further example, the storage device 150 may be connected to the processing device 140 directly or through the network 120. As still a further example, a terminal device (e.g., 131, 132, 133, etc.) may be connected to the processing device 140 directly (as indicated by the bi-directional arrow in dotted lines linking the terminal 130 and the processing device 140) or through the network 120.

In some embodiments, the imaging device 110 may be an image or video capture/acquiring device. In some embodiments, the imaging device 110 may include a medical imaging device, a camera, a laptop computer, an in-vehicle built-in device, a mobile device, etc., or any combination thereof. In some embodiments, the camera may include a surveillance camera used in a supermarket, a mall, a home, an office area, or the like, or any combination thereof. In some embodiments, the in-vehicle built-in device may include a laptop computer, a head up display (HUD), an on-board diagnostic (OBD) system, a driving recorder, a car navigation, or the like, or any combination thereof. In some embodiments, the mobile device may include a smartphone, a personal digital assistant (PDA), a tablet computer, a handheld game player, a smart glasses, a smart watch, a wearable device, a virtual reality, a display enhancement device, or the like, or any combination thereof.

If the imaging device 110 is the medical imaging device, the imaging device 110 may be used to scan an object located within its detection region and generate a plurality of scan data (e.g., digital signals) used to generate one or more images relating to the object. In the present disclosure, "subject" and "object" are used interchangeably. Mere by way of example, the object may include a patient, a man-made object, an animal, etc. As another example, the object may include a specific portion, organ, and/or tissue of a patient. For example, the object may include head, brain, neck, body, shoulder, arm, thorax, cardiac, stomach, blood vessel, soft tissue, knee, feet, or the like, or any combination thereof.

In some embodiments, the imaging device 110 may be used to scan a blood vessel of the object (e.g., a patient). For example, the imaging device 110 may be a digital subtraction angiography (DSA) imaging device. The digital subtraction angiography (DSA) imaging device may include an X-ray tube and a detector. The X-ray tube may emit X-rays going through the patient. The detector may be located opposite to the X-ray tube so as to detect the X-rays that have crossed the patient. The detector may transform the light signals of the detected X-rays into digital signals and transmit the digital signals to the processing device 140 for further processing (e.g., generating a mask image or a contrast image). In some embodiments, the digital subtraction angiography (DSA) imaging device may further include a high-voltage generator configured to provide the voltage that is required for the X-ray tube to produce X-rays. In some embodiments, the digital subtraction angiography (DSA) imaging device may further include a collimator configured to adjust an X-ray irradiation range. The collimator also can absorb some scattered X-rays, which may improve the image quality. The collimator may be located in front of the X-ray tube in the emitting direction of the X-rays.

The network 120 may include any suitable network that can facilitate the exchange of information and/or data for the imaging system 100. In some embodiments, one or more components of the imaging system 100 (e.g., the imaging device 110, the terminal 130, the processing device 140, or the storage device 150) may communicate information and/or data with one or more other components of the imaging system 100 via the network 120. For example, the processing device 140 may obtain at least one contrast image and at least one mask image from the imaging device 110 via the network 120. In some embodiments, the network 120 may be any type of wired or wireless network, or a combination thereof. The network 120 may be and/or include a public network (e.g., the Internet), a private network (e.g., a local area network (LAN), a wide area network (WAN)), etc.), a wired network (e.g., an Ethernet network), a wireless network (e.g., an 802.11 network, a Wi-Fi network, etc.), a cellular network (e.g., a Long Term Evolution (LTE) network), a frame relay network, a virtual private network ("VPN"), a satellite network, a telephone network, routers, hubs, switches, server computers, and/or any combination thereof. Merely by way of example, the network 120 may include a cable network, a wireline network, a fiber-optic network, a telecommunications network, an intranet, a wireless local area network (WLAN), a metropolitan area network (MAN), a public telephone switched network (PSTN), a Bluetooth^{™} network, a ZigBee^{™} network, a near field communication (NFC) network, or the like, or any combination thereof. In some embodiments, the network 120 may include one or more network access points. For example, the network 120 may include wired and/or wireless network access points such as base stations and/or internet exchange points through which one or more components of the imaging system 100 may be connected to the network 120 to exchange data and/or information.

The terminal 130 include a mobile device 131, a tablet computer 132, a laptop computer 133, or the like, or any combination thereof. In some embodiments, the mobile device 131 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a smart bracelet, smart footgear, a pair of smart glasses, a smart helmet, a smart watch, smart clothing, a smart backpack, a smart accessory, or the like, or any combination thereof. In some embodiments, the smart mobile device may include a smartphone, a personal digital assistant (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google^{™} Glass, an Oculus^{™} Rift, a Hololens^{™}, a Gear VR^{™}, etc. In some embodiments, the terminal 130 may remotely operate the imaging device 110 and/or the processing device 140. In some embodiments, the terminal 130 may operate the imaging device 110 and/or the processing device 140 via a wireless connection. In some embodiments, the terminal 130 may receive information and/or instructions inputted by a user, and send the received information and/or instructions to the imaging device 110 or to the processing device 140 via the network 120. In some embodiments, the terminal 130 may receive data and/or information from the processing device 140. In some embodiments, the terminal 130 may be part of the processing device 140. In some embodiments, the terminal 130 may be omitted.

The processing device 140 may process data and/or information obtained from the imaging device 110, the terminal 130, and/or the storage device 150. For example, the processing device 140 may generate a contrast image of the object and at least one mask image of the object by processing scan data (e.g., digitial signals) from the imaging device 110. As another example, the processing device 140 may extract a plurality of target structures from the at least one mask image by using one or more preset processing algorithms. As still another example, the processing device 140 may generate a subtracted image by subtracting the plurality of target structures from the contrast image. In some embodiments, the processing device 140 may be a single server, or a server group. The server group may be centralized or distributed. In some embodiments, the processing device 140 may be local or remote. For example, the processing device 140 may access information and/or data stored in or acquired by the imaging device 110, the terminal 130, and/or the storage device 150 via the network 120. As another example, the processing device 140 may be directly connected to the imaging device 110 (as illustrated by the bidirectional arrow in dashed lines connecting the processing device 140 and the imaging device 110 in FIG. 1), the terminal 130 (as illustrated by the bidirectional arrow in dashed lines connecting the processing device 140 and the terminal 130 in FIG. 1), and/or the storage device 150 to access stored or acquired information and/or data. In some embodiments, the processing device 140 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof. In some embodiments, the processing device 140 may be implemented on a computing device that includes a processor, a storage, an input/output (I/O), and a communication port.

The storage device 150 may store data and/or instructions. In some embodiments, the storage device 150 may store data obtained from the imaging device 110, the terminal 130 and/or the processing device 140. For example, the storage device 150 may store medical images (e.g., at least one mask image and at least one contrast image) generated by the processing device 140. In some embodiments, the storage device 150 may store data and/or instructions that the processing device 140 may execute or use to perform exemplary methods described in the present disclosure. For example, the storage device 150 may store instructions that the processing device 140 may execute to perform operations including at least one of: obtaining a contrast image of an object and a plurality of mask images of the object, selecting at least two mask images from the plurality of mask images based on the contrast image, obtaining high-frequency components and low-frequency components of each of the at least two mask images, generating a combined mask image by fusing a low-frequency component of one image of the at least two mask images and the high-frequency components of the at least two mask images, and generating a subtracted image by subtracting the combined mask image from the contrast image. In some embodiments, the storage device 150 may include a mass storage device, a removable storage device, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (TRAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc. In some embodiments, the storage device 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 150 may be connected to the network 120 to communicate with one or more components of the imaging system 100 (e.g., the imaging device 110, the processing device 140, the terminal 130, etc.). One or more components of the imaging system 100 may access the data or instructions stored in the storage device 150 via the network 120. In some embodiments, the storage device 150 may be directly connected to or communicate with one or more components of the imaging system 100 (e.g., the imaging device 110, the processing device 140, the terminal 130, etc.). In some embodiments, the storage device 150 may be part of the processing device 140.

In some embodiments, the imaging system 100 may further include one or more power supplies (not shown in FIG. 1) connected to one or more components of the imaging system 100 (e.g., the imaging device 110, the processing device 140, the terminal 130, the storage device 150, etc.).

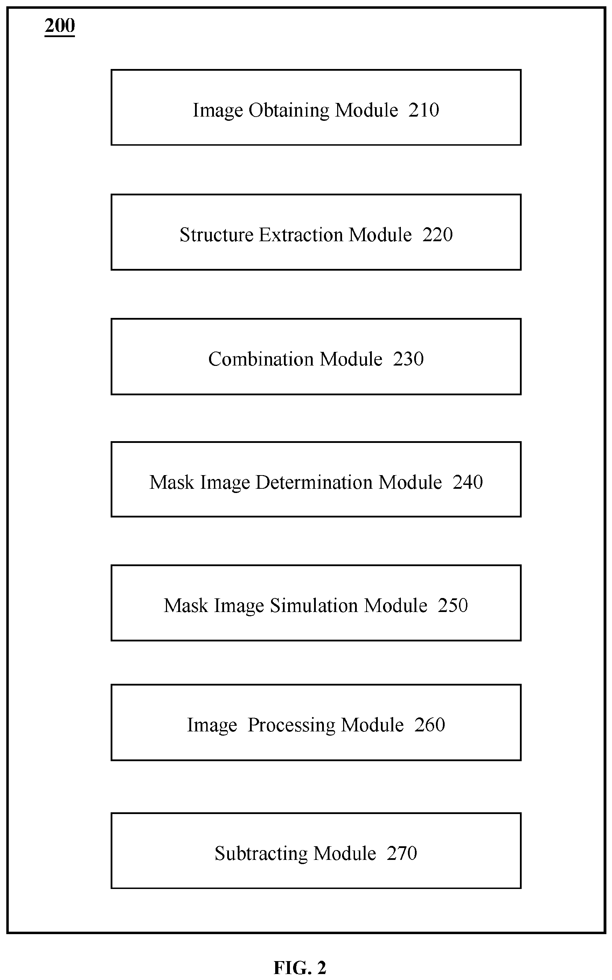

FIG. 2 is a schematic block diagram illustrating an exemplary processing device according to some embodiments of the present disclosure. The processing device 200 may include an image obtaining module 210, a structure extraction module 220, a combination module 230, a mask image determination module 240, a mask image simulation module 250, an image processing module 260, and a subtracting module 270. The processing device 200 may be an embodiment of the processing device 140.

The imaging obtaining module 210 may be configured to obtain a contrast image of an object and a plurality of mask images (or at least one mask image, or at least two mask images) of the object. Details regarding obtaining the contrast image and the one or more mask images may be found elsewhere in the present disclosure (e.g., the description in connection with 310, 710, and 910).

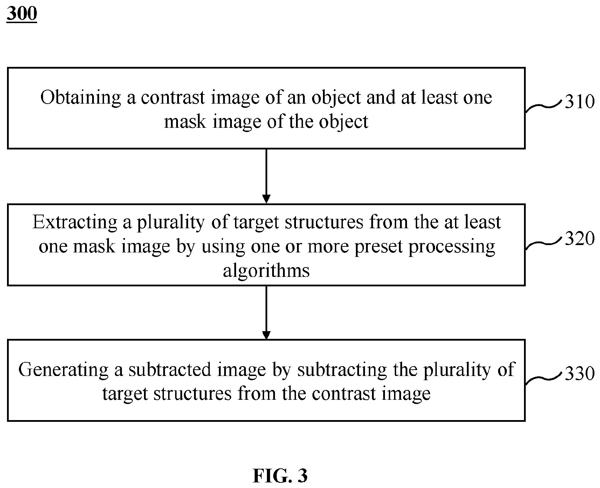

The structure extraction module 220 may be configured to extract a plurality of target structures from the at least one mask image by using one or more preset processing algorithms. Details regarding extracting the plurality of target structures may be found elsewhere in the present disclosure (e.g., the description in connection with FIGs. 3-7).

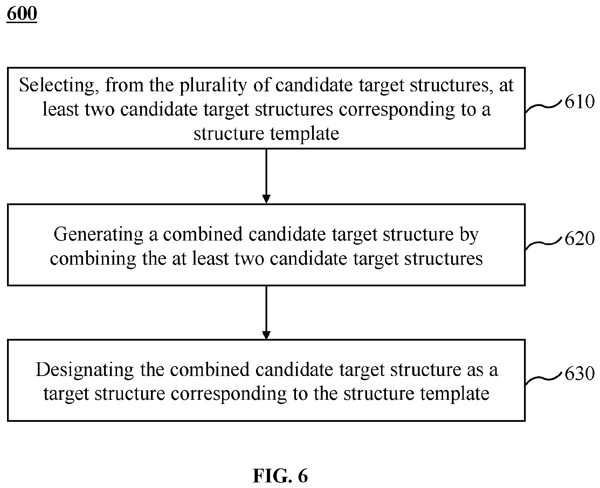

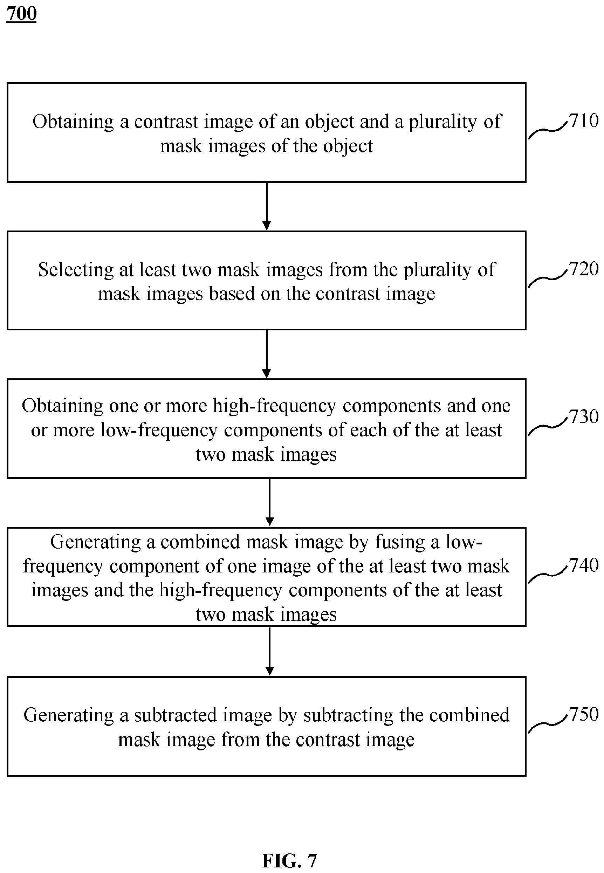

The combination module 230 may be configured to generate a combined mask image by fusing a low-frequency component of one image of at least two mask images and high-frequency components of the at least two mask images. Details regarding generating the combined mask image may be found elsewhere in the present disclosure (e.g., the description in connection with FIG. 7). In some embodiments, the combination module 230 may be configured to combine the at least two candidate target structures to generate a combined candidate target structure. Details regarding extracting the plurality of target structures may be found elsewhere in the present disclosure (e.g., the description in connection with FIG. 6).

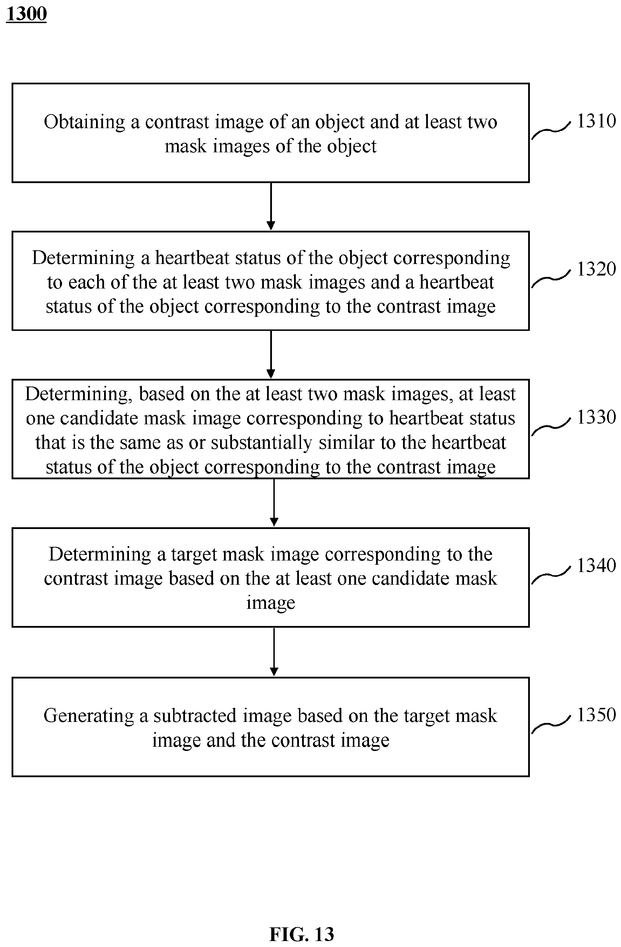

The mask image determination module 240 may be configured to select at least two mask images from the plurality of mask images based on the contrast image. Details regarding selecting the at least two mask images from the plurality of mask images based on the contrast image may be found elsewhere in the present disclosure (e.g., the description in connection with FIG. 7). In some embodiments, the mask image determination module 240 may determine a heartbeat status of the object corresponding to each of the at least two mask images and a heartbeat status of the object corresponding to the contrast image. In some embodiments, the mask image determination module 240 may determine, based on the at least two mask images, at least one candidate mask image corresponding to heartbeat status that is the same as or substantially similar to the heartbeat status of the object corresponding to the contrast image. In some embodiments, the mask image determination module 240 may determine a target mask image corresponding to the contrast image based on the at least one candidate mask image. Details regarding determining the target mask image may be found elsewhere in the present disclosure (e.g., the description in connection with FIG. 13).

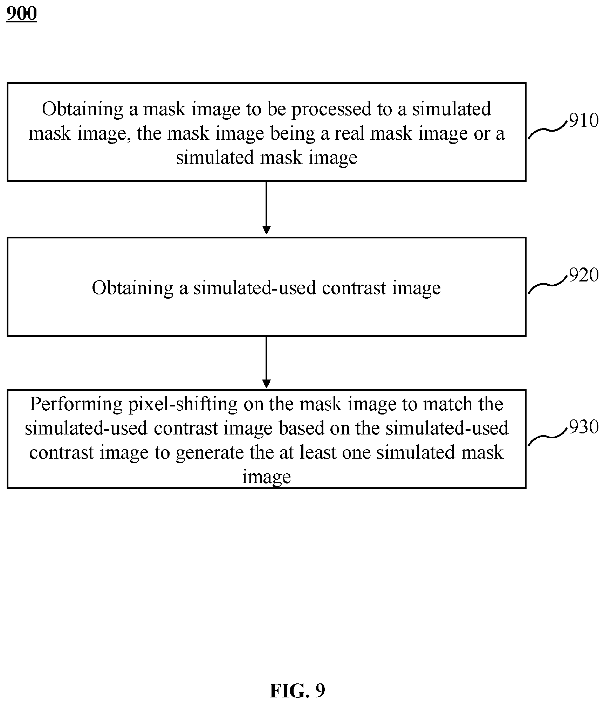

The mask image simulation module 250 may be configured to obtain a mask image to be processed to a simulated mask image and obtain a simulated-used contrast image. In some embodiments, the mask image simulation module 250 may generate at least one simulated mask image by performing pixel-shifting on the mask image to match the simulated-used contrast image based on the simulated-used contrast image. Details regarding determining the target mask image may be found elsewhere in the present disclosure (e.g., the description in connection with FIG. 9).

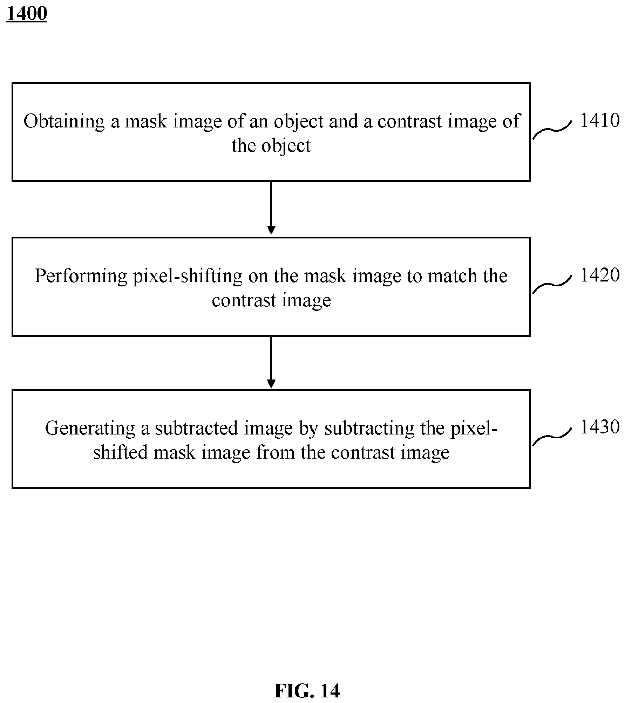

The image processing module 260 may be configured to the image processing module 260) may pre-process the contrast image and the real mask image. In some embodiments, the image processing module 260 may register the combined mask image with the contrast image. In some embodiments, the image processing module 260 may perform pixel-shifting on the combined mask image to match the contrast image or register the combined mask image with the contrast image. Details regarding performing pixel-shifting on the combined mask image (or referred to the mask image) to match the contrast image may be found elsewhere in the present disclosure (e.g., the description in connection with FIG. 14). In some embodiments, the image processing module 260 may perform pixel-shifting on a combined candidate target structure to match a structure template. In some embodiments, the image processing module 260 may post-process the blood vessel subtracted image to obtain the target blood vessel image.

The subtracting module 270 may be configured to generate a subtracted image by subtracting the plurality of target structures from the contrast image. In some embodiments, the subtracting module 270 may generate a subtracted image by subtracting the combined mask image from the contrast image. In some embodiments, the subtracting module 270 may generate a subtracted image based on the target mask image and the contrast image. Details regarding generating the subtracted image may be found elsewhere in the present disclosure (e.g., the description in connection with FIGs. 3, 7, and 13).

The modules in the processing device 200 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof. Two or more of the modules may be combined as a single module, and any one of the modules may be divided into two or more units. For example, the imaging processing module 410 may be divided into two units One of the two unit may be configured to obtain a contrast image, and the other one of the two unit may be configured to obtain one or more mask images.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. For example, the processing device 200 may further include a storage module (not shown in FIG. 2). The storage module may be configured to store data generated during any process performed by any component of in the processing device 200. As another example, each of the components of the processing device 200 may include a storage device. Additionally or alternatively, the components of the processing device 200 may share a common storage device.

FIG. 3 is a flowchart illustrating an exemplary process for generating a subtracted image by subtracting a plurality of target structures from a contrast image according to some embodiments of the present disclosure. In some embodiments, the process 300 may be implemented in the imaging system 100 illustrated in FIG. 1. For example, the process 300 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 300 presented below are intended to be illustrative. In some embodiments, the process 300 may be accomplished with one or more additional operations not described, and/or without one or more of the operations discussed. Additionally, the order in which the operations of the process 300 as illustrated in FIG. 3 and described below is not intended to be limiting.

In 310, the processing device 140 (e.g., the image obtaining module 210) may obtain a contrast image of an object and at least one mask image of the object. The contrast image of the object and at least one mask image of the object may be acquired by an imaging device (e.g., the imaging device 110 of the imaging system 100 in FIG. 1). In some embodiments, the imaging device 110 used here may be a digital subtraction angiography (DSA) imaging device.

In some embodiments, the contrast image may be an image of the object that is obtained by scanning the object having received a contrast agent. In some embodiments, the contrast image may be acquired by the imaging device 110 scanning the object. In some embodiments, the contrast image may be acquired by scanning the object with other medical devices. In some embodiments, the processing device 140 may obtain the contrast image from the imaging device 110, other medical devices, the terminal 130, and the storage device 150, and so on.

In some embodiments, the contrast agent may be added to the blood of the object by intravenous injection or arterial injection. During the scanning process, due to non-absorption or little absorption of the contrast agent of the X-rays, the blood vessels of the object would have a certain level of visibility in the contrast image. The observation of the blood vessels in the contrast image may provide assistance in the diagnosis of vascular diseases. In some embodiments, the contrast agent may also be injected into other tissues or parts of the object, such as fallopian tubes, joints, etc. In some embodiments, the contrast agent may include barium sulfate, iodide, and so on.

In some embodiments, the at least one mask image may be a real mask image. The real mask image may be an image of the object that is obtained by scanning the object before receiving the contrast agent. In some embodiments, the real mask image may be acquired by the imaging device 110 scanning the object. In some embodiments, the real mask image may be obtained by scanning the object with other medical devices. In some embodiments, the processing device 140 may obtain the real mask image from the imaging device 110, other medical devices, the terminal 130, and the storage device 150, and so on.

In some embodiments, the contrast image and the real mask image may be obtained by scanning the same region of interest of the same object by the same imaging device. The times of scanning the object to obtain the contrast image and the real mask image may be different and exist a time interval. The time interval may be a few minutes, such as 2 minutes, 3 minutes 5 minutes, 5 minutes, 7 minutes or 10 minutes, etc.

In some embodiments, the processing device 140 (e.g., the image processing module 260) may pre-process the contrast image and the real mask image. The preprocessing may include performing one or more operations on the image, for example, log transformation, noise reduction processing, regularization processing, and so on.

In some embodiments, the at least one mask image may be selected from a plurality of mask images acquired in advance. In some embodiments, the plurality of mask images may be processed to determine the structural segmentation effect, the subtracting effect, and the motion offset degree of each of the plurality of mask images. One or more mask images may be selected (for example, those with better structural segmentation effect, subtracting effect, and smaller motion offset) according to the processing results.

In some embodiments, the processing device 140 (e.g., the mask image determination module 240) may determine a plurality of similarities. Each of the plurality of similarities may be a similarity between the contrast image and one of the plurality of mask images. In some embodiments, the processing device 140 (e.g., the mask image determination module 240) may select, from the plurality of mask images, the at least one mask image based on the plurality of similarities. Details regarding selecting the at least one mask image from the plurality of mask images based on the plurality of similarities may be found elsewhere in the present disclosure (e.g., the description in connection with FIG. 7).

In some embodiments, the at least one mask image may be selected from a plurality of mask images based on the heartbeat status of the object. In some embodiments, the object may include all or part of a heart. In some embodiments, the processing device 140 (e.g., the mask image determination module 240) may determine a heartbeat status of the object corresponding to each of a plurality of mask images and a heartbeat status of the object corresponding to the contrast image. The processing device 140 (e.g., the image obtaining module 210) may select, from the plurality of mask images, the at least one mask image corresponding to heartbeat status that is the same as or substantially similar to the heartbeat status of the object corresponding to the contrast image.

In some embodiments, the processing device 140 (e.g., the mask image determination module 240) may determine image acquisition frequencies of the plurality of mask images and the contrast image and a cardiac cycle of the object. The processing device 140 (e.g., the mask image determination module 240) may select, from the plurality of mask images, based on the image acquisition frequencies of the plurality of mask images and the contrast image and a cardiac cycle of the object, the at least one mask image corresponding to heartbeat status that is the same as or substantially similar to the heartbeat status of the object corresponding to the contrast image.

Details regarding selecting the at least one mask image from the plurality of mask images may be found elsewhere in the present disclosure (e.g., the description in connection with FIG. 13).

In some embodiments, the count of the mask images having a heartbeat status that is the same as or substantially similar to the heartbeat status of the object corresponding to the contrast image may be larger than a threshold. The threshold may be an integer, for example, 2, 3, 4, 5, 6, 7, 8, 9, 10, and so on. The processing device 140 (e.g., the image obtaining module 210 or the mask image determination module 240) may select the at least one mask image from the mask images according to other criteria. In some embodiments, the processing device 140 may select the at least one mask image according to the structural segmentation effect, the subtracting effect, and the motion offset degree of the mask images. In some embodiments, the processing device 140 may select the at least one mask image according to the similarity between the contrast image and mask images. In some embodiments, the processing device 140 may select the at least one mask image according to the image quality of the mask images.

In 320, the processing device 140 (e.g., the structure extraction module 220) may extract a plurality of target structures from the at least one mask image by using one or more preset processing algorithms. In some embodiments, each of the plurality of target structures may correspond to a part of the contrast image. Merely as an example, the plurality of target structures may include a heart structure, a lung structure, and a spine structure. The heart structure may correspond to a heart part of the contrast image, the lung structure may correspond to a lung part of the contrast image, and the spine structure may correspond to a spine part of the contrast image.

The one or more preset processing algorithms may refer to one or more predetermined algorithms that may be used to process a mask image according to the characteristics or tissue parts of a mask image. In some embodiments, the one or more preset processing algorithms may be used to extract a plurality of target structures from the at least one mask image. Herein the term "structure" may refer to imaging elements (e.g., whole image, part of image, or pixel combinations) corresponding to real world objects. For simplicity in description, the "structure" may directly refer to the object, without specifically mentioning the "structure" being imaging elements that correspond to the object. For example, the plurality of target structures may include bone, chest, lung, liver, etc. Each of the plurality of target structures may refer to a structure that needs to be subtracted (removed) from the contrast image. In some embodiments, the target structure may be presented in a form of an image, part of an image, or a combination of imaging pixels. In some embodiments, the plurality of target structures may be divided into different types of structures according to the motion of the plurality of target structures. In some embodiments, the plurality of target structures may include moving structures (e.g., heart, lungs, etc.) and non-moving structures (e.g., spine, etc.). In some embodiments, the moving structures may include a plurality of movement structures of different movement types. The different movement types may include breathing motion, body shaking, heartbeat motion, bed and/or medical device motion, etc.

In some embodiments, the types of the plurality of target structures (moving structures, non-moving structures, or movement structures of different movement types) may be determined in a variety of ways. In some embodiments, the movement types of the plurality of target structures may be preset. For example, the heart may be set as the moving structure, the spine may be set as the non-moving structure. Furthermore, the heart may be set as the heartbeat motion, the lung may be set as the breathing motion, the whole body may be set as the body shaking or the movement of a bed and/or a medical device, and so on. In some embodiments, the movement types of the plurality of target structures may be learned from the historical data. The historical data may include a plurality of historical images. The plurality of historical images may include a plurality of historical mask images and/or historical contrast images. In some embodiments, the movement types of the plurality of target structures in the plurality of historical images may be marked by a plurality of movement type labels manually. The plurality of historical images and the plurality of movement type labels may be used to train a machine learning model to get a trained model. The trained model may be used to determine the movement types of the plurality of target structures. In some embodiments, for a historical subtracted image that is generated based on a historical mask image and a historical contrast image, a subtraction result of each of a plurality of target structures in the historical subtracted image may be designated a score. A high score may indicate a good subtraction effect or structure extraction effect and vice versa. A movement type of a target structure with poor subtraction effect or structure extraction effect may be modified. For example, modify the body shaking to the bed movement, modify the heartbeat motion to the body shaking, modify the heartbeat motion to the breathing motion, and so on. It should be noted that the above examples are only for the purpose of examples. In addition to the methods described above, other methods may be used to determining the movement types of the plurality of target structures.

In some embodiments, the one or more preset processing algorithms may include a brightness-based structure extraction algorithm, a grayscale-based structure extraction algorithm, a gradient-based structure extraction algorithm, a motion detection-based structure extraction algorithm, and so on. The processing device 140 (e.g., the structure extraction module 220) may process a mask image using the one or more preset processing algorithms to extract a plurality of target structures.

In some embodiments, the mask image may include a plurality of pixels or voxels with brightness values (or grayscale values). The pixels or voxels of different target structures may include different brightness values (or grayscale values). The brightness-based (or grayscale-based) structure extraction algorithm may include one or more brightness (or grayscale) thresholds or ranges. Each of the one or more brightness (or grayscale) thresholds or ranges may correspond to a target structure. The brightness-based (or grayscale-based) structure extraction algorithm may segment a plurality of pixels or voxels with brightness values (or grayscale values) in a range, or larger (or smaller) than a threshold. The segmented pixels or voxels may include the target structure corresponding to the threshold or range. It is noted that the gradient can be calculated not only in two or three directions, but also in directions of a diagonal or a line connecting any two pixels or voxels.

In some embodiments, the mask image may include a plurality of pixels or voxels with gradient values. The pixels or voxels of different target structures may include different gradient values. The gradient-based structure extraction algorithm may include one or more gradient thresholds or ranges. The gradient-based structure extraction algorithm may segment a plurality of pixels or voxels with gradient values in a range, or larger (or smaller) than a threshold. The segmented pixels or voxels may include the target structure corresponding to the gradient threshold or range.

In some embodiments, the motion detection-based structure extraction algorithm may include Roberts operator, Prewitt operator, Sobel operator, SUSAN operator, and so on. Taking the SUSAN operator as an example, the SUSAN operator may move on the mask image using a circular template with a radius of 3.4 pixels, the circular template including 37 pixels. A plurality of SUSAN values may be obtained by comparing each pixel in the circular template with the central pixel of the circular template. A preliminary edge response may be obtained by thresholding the plurality of SUSAN values, for example, a threshold, half of the maximum SUSAN value. An operation of non-maximum suppression may be performed on the preliminary edge response to obtain the structure information of the mask image. In some embodiments, the processing device 140 (e.g., the structure extraction module 220) may extract corresponding structure components of the mask image and the contrast image. The processing device 140 (e.g., the structure extraction module 220) may determine an average displacement between the mask image and the contrast image by a displacement calculation method, such as averaging the position information of the structure components in the mask image and the contrast image.

In some embodiments, the processing device 140 (e.g., the structure extraction module 220) may process the at least one mask image using one preset processing algorithm to extract one or more target structures. In some embodiments, the processing device 140 (e.g., the structure extraction module 220) may process a mask image a plurality of times using the preset processing algorithm, and for each time, one structure may be obtained. In some embodiments, the processing device 140 (e.g., the structure extraction module 220) may process each of a plurality of mask images using the same preset processing algorithm. For each of the plurality of mask images, a plurality of structures are extracted from the mask image. A plurality of structures extracted from a mask image of the plurality of mask images may be the same types as a plurality of structures extracted from another mask image of the plurality of mask images. In some embodiments, a plurality of target structures may be selected from the plurality of structures.

In some embodiments, the processing device 140 (e.g., the structure extraction module 220) may process the at least one mask image using different preset processing algorithms to extract one or more target structures. In some embodiments, the at least one mask image may include one mask image. The processing device 140 (e.g., the structure extraction module 220) may use different preset processing algorithms to process the mask image. Each of the preset processing algorithms may be used to extract a plurality of structures. A plurality of structures extracted using a preset processing algorithm of the preset processing algorithms may be the same types as a plurality of structures using another preset processing algorithm of the preset processing algorithms. One or more target structures may be selected from the plurality of structures extracted using the preset processing algorithms. For example, the mask image may be processed by a first preset processing algorithm to extract structures A1 and B1, and the mask image may be processed by a second preset processing algorithm to extract structures A2 and B2. A1 and A2 may be structures of the same type and B1 and B2 may be structures of the same type A1 may be selected from A1 and A2 and B2 may be selected from B1 and B2. In some embodiments, for each of the plurality of mask images, the processing device 140 (e.g., the structure extraction module 220) may use a different preset processing algorithm to process the mask image to extract a plurality of structures. A plurality of structures extracted from a mask image using a preset processing algorithm of the preset processing algorithms may be the same types as a plurality of structures extracted from another mask image using another preset processing algorithm of the preset processing algorithms. For example, a first mask image may be processed by a first preset processing algorithm to extract structure A1, and a second mask image may be processed by a second preset processing algorithm to extract structure A2. A target structure A1 may be selected from A1 and A2. In some embodiments, the processing device 140 (e.g., the structure extraction module 220) may use different preset processing algorithms to process each of the plurality of mask images to extract a plurality of structures. For example, a first mask image and a second image may be processed by a first preset processing algorithm to extract structures A1 and A2, and the first mask image and the second image may be processed by a second preset processing algorithm to extract structures B1 and B2. A target structure A1 may be selected from A1 and A2 and a target structure B1 may be selected from B1 and B2.

In some embodiments, different preset processing algorithms may correspond to different types of target structures. In some embodiments, a preset processing algorithm that is suitable to extract movement structures may be used to extract movement structures. Similarly, a preset processing algorithm that is suitable to extract non-movement structures may be used to extract non-movement structures. In some embodiments, a corresponding processing algorithm may be preset for each of the target structures of different movement types to achieve a better structure extraction effect.

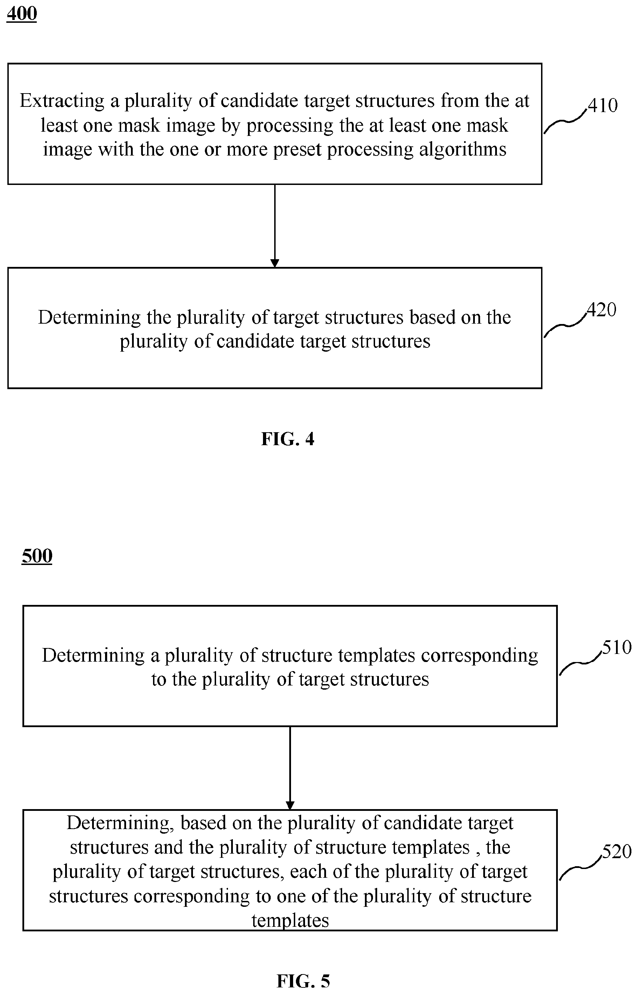

More descriptions regarding extracting the plurality of target structures may be found elsewhere in the present disclosure, e.g., FIG. 4 and FIG. 5.

In 330, the processing device 140 (e.g., the subtracting module 270) may generate a subtracted image by subtracting the plurality of target structures from the contrast image.

In some embodiments, the subtracted image may refer to an image generated after the plurality of target structures are subtracted from the contrast image. In some embodiments, the subtracted image may clearly show tissues such as blood vessels or vascular. The subtracted image may include an angiography image, a cardiography image, a salpingography image, and an arthrography image.

The subtracting operation may refer to removing the plurality of target structures from the contrast image. The removing operation may be referred to as the subtracting operation. In some embodiments, the processing device 140 (e.g., the subtracting module 270) may perform the removing operation based on the contrast image and the plurality of target structures to remove the plurality of target structures from the contrast image.

In some embodiments, the processing device 140 (e.g., the subtracting module 270) may perform a plurality of subtracting operations to remove the plurality of target structures from the contrast image.

Merely by way of example, the plurality of target structures may include target structure 1, target structure 2, and target structure 3. The processing device 140 (e.g., the subtracting module 270) may perform a first subtracting operation to remove target structure 1 from the contrast image to obtain a first preliminary subtracted image. The processing device 140 (e.g., the subtracting module 270) may perform a second subtracting operation to remove target structure 2 from the first preliminary subtracted image to obtain a second preliminary subtracted image. The processing device 140 (e.g., the subtracting module 270) may perform a third subtracting operation to remove target structure 3 from the second preliminary subtracted image to obtain a third preliminary subtracted image. The third preliminary subtracted image may be the subtracted image. In some embodiments, the subtracted image may include only the image data of the blood vessels.

In some embodiments, the subtracted image obtained after the plurality of subtracting operations may be designated as a final subtracted image.

In some embodiments, the subtracted image obtained after the plurality of subtracting operations may be post-processed to obtain a final subtracted image. The post-process operation may include LUT curve transformation, multi-scale enhancements, and so on. Details regarding the post-process operation may be found elsewhere in the present disclosure (e.g., the description in connection with FIG. 13).

The times of scanning the object to obtain the contrast image and a mask image of the at least one mask image may be different and exist a time interval. Different structures may have different motion trends between the time interval. Some structures may have large motion ranges and some structures may have small motion ranges. The plurality of target structures may be determined based on the mask image. The image registration degree between a target structure and the corresponding structure in the contrast image may be higher compared with an image registration degree between a mask image and a contrast image. Additionally, compared with the possible problems of partial overfitting and partial underfitting in one-time subtracting operation (i.e., subtracting a mask image from a contrast image by one subtracting operation), the plurality of subtracting operations may achieve a better effect of local removal of each of the structures in the contrast image corresponding to the plurality of target structures. Thus, a better subtraction effect may be achieved and a subtracted image with less motion artifact may be obtained.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 4 is a flowchart illustrating an exemplary process for determining a plurality of target structures according to some embodiments of the present disclosure. In some embodiments, the process 400 may be implemented in the imaging system 100 illustrated in FIG. 1. For example, the process 400 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 400 presented below are intended to be illustrative. In some embodiments, the process 400 may be accomplished with one or more additional operations not described, and/or without one or more of the operations discussed.

In 410, the processing device 140 (e.g., the structure extraction module 220) may extract a plurality of candidate target structures from the at least one mask image by processing the at least one mask image with the one or more preset processing algorithms.

The plurality of candidate target structures may be a plurality of structures directly extracted from the at least one mask image. The plurality of candidate target structures may be used to determine the plurality of target structures. In some embodiments, the plurality of candidate target structures may be screened or processed to determine the plurality of target structures.

In some embodiments, the processing device 140 (e.g., the structure extraction module 220) may process the at least one mask image with the one or more preset processing algorithms to extract the plurality of candidate target structures (or refer to a plurality of structures). In some embodiments, the processing device 140 (e.g., the structure extraction module 220) may process the at least one mask image with one preset processing algorithm to extract the plurality of candidate target structures. In some embodiments, the processing device 140 (e.g., the structure extraction module 220) may process each of the at least one mask image with a plurality of preset processing algorithms to extract the plurality of candidate target structures. In some embodiments, the processing device 140 (e.g., the structure extraction module 220) may process each of the at least one mask image with a different preset processing algorithm to extract the plurality of candidate target structures. More descriptions regarding processing the at least one mask image with the one or more preset processing algorithms to extract a plurality of candidate target structures (or refer to a plurality of structures) may be found elsewhere in the present disclosure, e.g., 320 of FIG. 3.

In 420, the processing device 140 (e.g., the structure extraction module 220) may determine the plurality of target structures based on the plurality of candidate target structures.

In some embodiments, the processing device 140 (e.g., the structure extraction module 220) may process the plurality of candidate target structures to determine the plurality of target structures based on the plurality of candidate target structures. The processing device 140 (e.g., the structure extraction module 220) may compare and/or assess the image quality of the plurality of candidate target structures to determine the plurality of target structures.

In some embodiments, for each of the plurality of target structures, the processing device 140 (e.g., the structure extraction module 220) may determine the target structure based on one or more candidate target structures corresponding to the target structure. Merely in way of example, regarding target structure A, the corresponding candidate target structures may include candidate target structure A1, candidate target structure A2,..., and candidate target structure An. The value of "n" may be an integer larger than or equal to 1. The processing device 140 (e.g., the structure extraction module 220) may determine target structure A based on candidate target structure A1-An. Similarly, regarding target structure B, the corresponding candidate target structures may include candidate target structure B1, candidate target structure B2,..., and candidate target structure Bn. The value of "n" may be an integer larger than or equal to 1. The processing device 140 (e.g., the structure extraction module 220) may determine target structure B based on candidate target structure B1-Bn.

In some embodiments, for each of the plurality of target structures, the processing device 140 (e.g., the structure extraction module 220) may assess the image quality of the plurality of candidate target structures and determine the plurality of target structures according to the assession results. In some embodiments, for each of the plurality of target structures, the processing device 140 (e.g., the structure extraction module 220) may designate, from one or more candidate target structures corresponding to the target structure, a candidate target structure with the best image quality as the target structure. Image quality assessment may include assessing the image quality of and/or the structure quality of the plurality of candidate target structures. The assessment parameters of the image quality may include sharpness, contrast, noise, artifact, and so on.

In some embodiments, the processing device 140 (e.g., the structure extraction module 220) may determine each of the plurality of target structures based on a structure template corresponding to the target structure. More descriptions regarding determining the plurality of target structures based on the structure templates may be found elsewhere in the present disclosure, e.g., FIG. 5.

In some embodiments, the processing device 140 (e.g., the structure extraction module 220) may combine two or more candidate target structures corresponding to a target structure to generate a combined candidate target structure. The combined candidate target structure may be designated as the target structure. Compared to the two or more candidate target structures, the combined candidate target structure may be more close to a structure in the contrast image that corresponds to the target structure and a better subtracting effect may be achieved based on the combined candidate target structure.

FIG. 5 is a flowchart illustrating an exemplary process for determining a plurality of target structures corresponding to a plurality of structure templates according to some embodiments of the present disclosure. In some embodiments, the process 500 may be implemented in the imaging system 100 illustrated in FIG. 1. For example, the process 500 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 500 presented below are intended to be illustrative. In some embodiments, the process 500 may be accomplished with one or more additional operations not described, and/or without one or more of the operations discussed.

In 510, the processing device 140 (e.g., the structure extraction module 220) may determine a plurality of structure templates corresponding to the plurality of target structures. The structure template may be a base image corresponding to the target structure. Each of the plurality of structure templates may correspond to a target structure. The structure template may be used to compare with the plurality of candidate target structures corresponding to the target structure. The structure template may be from an image of the same object.

In some embodiments, the processing device 140 (e.g., the structure extraction module 220) may process the contrast image with a processing algorithm to extract a plurality of structure templates from the contrast image. The processing algorithm may be the same as or different from the one or more preset processing algorithms that are used to extract the plurality of candidate target structures from the at least one mask image.

In some embodiments, the processing device 140 (e.g., the structure extraction module 220) may use the one or more processing algorithms that are used to extract the plurality of candidate target structures corresponding to a target structure from the at least one mask image to extract one or more structure templates corresponding to the target structure from the contrast image. In some embodiments, the processing device 140 (e.g., the structure extraction module 220) may extract target structure 1 (or candidate target structures 1-1, 1-2...) from the at least one mask image using preset processing algorithm 1 and extract target structure 2 (or candidate target structures 2-1, 2-2...) from the at least one mask image using preset processing algorithm 2. The processing device 140 (e.g., the structure extraction module 220) may extract structure template 1 from the contrast image using preset processing algorithm 1 and extract structure template 2 from the contrast image using preset processing algorithm 2. Structure template 1 corresponds to target structure 1 and structure template 2 corresponds to target structure 2. In some embodiments, the processing device 140 (e.g., the structure extraction module 220) may extract a plurality of structure templates of the same type from the contrast image using the same preset processing algorithm. For example, the processing device 140 (e.g., the structure extraction module 220) may extract a plurality of bone structure templates, e.g., bone structure template 1, bone structure template 2, and bone structure template 3, from the contrast image using the same preset processing algorithm.

In some embodiments, the processing device 140 (e.g., the structure extraction module 220) may use a processing algorithm different from the one or more processing algorithms that are used to extract the plurality of candidate target structures corresponding to a target structure from the at least one mask image to extract one or more structure templates corresponding to the target structure from the contrast image. In some embodiments, the processing device 140 (e.g., the structure extraction module 220) may extract a target structure (or one or more candidate target structures) from the at least one mask image using preset processing algorithm A. The processing device 140 (e.g., the structure extraction module 220) may extract a structure template corresponding to the target structure from the contrast image using preset processing algorithm B. Preset processing algorithm A may be the same as or different from the preset processing algorithm B.

In some embodiments, the processing device 140 (e.g., the structure extraction module 220) may obtain the plurality of structure templates from a database, a storage device, and so on.

In 520, the processing device 140 (e.g., the structure extraction module 220) may determine, based on the plurality of candidate target structures, the plurality of target structures, each of the plurality of target structures corresponding to one of the plurality of structure templates.

In some embodiments, for each of the plurality of structure templates, the processing device 140 (e.g., the structure extraction module 220) may compare the structure template with a plurality of candidate target structures corresponding to the structure template to determine a plurality of similarities between the structure template and the plurality of candidate target structures corresponding to the structure template. The processing device 140 (e.g., the structure extraction module 220) may determine a target structure corresponding to the structure template based on the plurality of similarities. Merely by way of example, the plurality of structure templates may include structure template 1, structure template 2, and structure template 3. Structure template 1 may be a heart structure template. Structure template 2 may be a bone structure template. Structure template 3 may be a tissue structure template. The plurality of candidate target structures may include a plurality of heart candidate target structures corresponding to the heart structure template, a plurality of bone candidate target structures corresponding to the bone structure template, and a plurality of tissue candidate target structures corresponding to the tissue structure template. The processing device 140 (e.g., the structure extraction module 220) may compare the plurality of heart candidate target structures with the heart structure template, compare the plurality of bone candidate target structures with the bone structure template, and compare the plurality of tissue candidate target structures with the tissue structure template.

In some embodiments, for each of the plurality of structure templates, the processing device 140 (e.g., the structure extraction module 220) may determine the plurality of similarities between the structure template and the plurality of candidate target structures corresponding to the structure template and rank the plurality of similarities. The processing device 140 (e.g., the structure extraction module 220) may use a similarity calculation method to calculate the plurality of similarities between the structure template and the plurality of candidate target structures. The similarity calculation method may include Euclidean distance, gradient similarity, Pearson correlation coefficient, cosine distance, Hamming distance, structural similarity, subtraction histogram, entropy correlation coefficient, correlation coefficient, and so on. More descriptions regarding determining the similarity may be found elsewhere in the present disclosure, e.g., FIG. 7.

In some embodiments, the processing device 140 (e.g., the structure extraction module 220) may designate a candidate target structure, from the plurality of candidate target structures corresponding to the structure template, having the highest similarity as the target structure.

In some embodiments, the processing device 140 (e.g., the structure extraction module 220) may select two or more candidate target structures with two or more high similarities and assign two or more weights to the two or more candidate target structures. In some embodiments, the processing device 140 (e.g., the structure extraction module 220) may assign the two or more weights based on the similarities of the two or more candidate target structures. The weight and the similarity are positively correlated. The processing device 140 (e.g., the structure extraction module 220) may determine the target structure based on the two or more candidate target structures and the two or more weights.

In some embodiments, the processing device 140 (e.g., the structure extraction module 220) may combine the two or more candidate target structures based on the two or more weights. In some embodiments, the processing device 140 (e.g., the structure extraction module 220) may multiply each of the two or more candidate target structures with the corresponding weight to obtain two or more weighted candidate target structures, and add the two or more weighted candidate target structures to determine the target structure. For example, the weight of a first candidate target structure may be 0.7, the weight of a second candidate target structure may be 0.2, and the weight of a third candidate target structure may be 0.1. The processing device 140 (e.g., the structure extraction module 220) may multiply the image data of the first candidate target structure with 0.7, multiply the image data of the second candidate target structure with 0.2, multiply the image data of the third candidate target structure with 0.1, adding the three weighted image data of the three candidate target structure to obtain a combined candidate target structure. The combined candidate target structure may be designated as the target structure.

In some embodiments, the processing device 140 (e.g., the structure extraction module 220) may decompose the image data of each of the two or more candidate target structures into one or more high-frequency components and one or more low-frequency components. The one or more high-frequency components and one or more low-frequency components may be obtained by filtering, pyramid decomposition, and so on. The processing device 140 (e.g., the structure extraction module 220) may combine the two or more candidate target structures based on the two or more weights, the one or more high-frequency components, and one or more low-frequency components. Merely by way of example, the weight of a first candidate target structure may be 0.9, and the weight of a second candidate target structure may be 0.1. The processing device 140 (e.g., the structure extraction module 220) may combine a low-frequency component of the first candidate target structure, a high-frequency component of the first candidate target structure with a weight of 0.9, and a high-frequency component of the first candidate target structure with a weight of 0.1, to obtain a combined candidate target structure. The combined candidate target structure may be designated as the target structure.

More descriptions regarding combining the plurality of candidate target structures may be found elsewhere in the present disclosure, e.g., FIG. 6.

By determining a candidate target structure having the highest similarity as the target structure, or combining the plurality of candidate target structures according to corresponding weights as the target structure, the target structure may have a high similarity with the corresponding structure template from the contrast image. Thus, a structure in the contrast image corresponding to the target structure may be subtracted from the contrast image more accurately.

FIG. 6 is a flowchart illustrating an exemplary process for designating a combined candidate target structure as a target structure corresponding to a structure template according to some embodiments of the present disclosure. In some embodiments, the process 600 may be implemented in the imaging system 100 illustrated in FIG. 1. For example, the process 600 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 600 presented below are intended to be illustrative. In some embodiments, the process 600 may be accomplished with one or more additional operations not described, and/or without one or more of the operations discussed.

In 610, for each of the plurality of structure templates, the processing device 140 (e.g., the structure extraction module 220) may select, from the plurality of candidate target structures, at least two candidate target structures corresponding to a structure template.

In some embodiments, the processing device 140 (e.g., the structure extraction module 220) may select the at least two candidate target structures according to the similarities between the structure template and the plurality of candidate target structures. The plurality of candidate target structures may correspond to the structure template. For example, the structure template may be related to a spine, and the plurality of candidate target structures may also be related to a spine. In some embodiments, the selected at least two candidate target structures may have at least two top high similarities among a plurality of similarities between the structure template and the plurality of candidate target structures.

In 620, the processing device 140 (e.g., the structure extraction module 220 or the combination module 230) may generate a combined candidate target structure by combining the at least two candidate target structures. The at least two candidate target structures may be the selected at least two candidate target structures.

In some embodiments, the processing device 140 may combine the at least two candidate target structures without distinguishing their low-frequency components and high-frequency components. In some embodiments, the processing device 140 may combine the image data of the at least two candidate target structures with their respective weights. The weight and the similarity are positively correlated. In some embodiments, the processing device 140 may multiply each of the at least two candidate target structures with the corresponding weight to obtain at least two weighted candidate target structures, and add the at least two weighted candidate target structures to determine the target structure. For example, the weight of a first candidate target structure may be 0.7, the weight of a second candidate target structure may be 0.2, and the weight of a third candidate target structure may be 0.1. The processing device 140 may multiply the image data of the first candidate target structure with 0.7, multiply the image data of the second candidate target structure with 0.2, multiply the image data of the third candidate target structure with 0.1, adding the three weighted image data of the three candidate target structure to obtain a combined candidate target structure. The combined candidate target structure may be designated as the target structure.

In some embodiments, the processing device 140 may combine the at least two candidate target structures by combining low-frequency components and high-frequency components of the at least two candidate target structures. In some embodiments, the processing device 140 may decompose the image data of each of the at least two candidate target structures into one or more high-frequency components and one or more low-frequency components. In some embodiments, the processing device 140 may generate the combined candidate target structure by fusing the low-frequency component of at least one of the at least two candidate target structures and the high-frequency components of the at least two candidate target structures. In some embodiments, the processing device 140 may combine the at least two candidate target structures according to at least two weights of the at least two candidate target structures, the one or more high-frequency components, and one or more low-frequency components. The weight and the similarity are positively correlated.

In some embodiments, the processing device 140 may obtain low-frequency components of two or more of the at least two candidate target structures and combine the low-frequency components to produce a fused low-frequency component. The two or more of the at least two candidate target structures may be selected based on the similarity. The processing device 140 may obtain high-frequency components of the at least two candidate target structures and fuse the high-frequency components to produce a fused high-frequency component. The processing device 140 may combine the fused low-frequency component and the fused high-frequency component to obtain the combined candidate target structure. In some embodiments, the processing device 140 may combine low-frequency components of the at least two candidate target structures to produce a fused low-frequency component, combine high-frequency components of the at least two candidate target structures to produce a fused high-frequency component, and combine the fused low-frequency component and the fused high-frequency component to obtain the combined candidate target structure.

In some embodiments, the processing device 140 may designate a low-frequency component of the candidate target structure having a highest similarity among a plurality of similarities between the plurality of candidate target structures and the structure template as a base frequency. The processing device 140 may obtain high-frequency components of the at least two candidate target structures and fuse the high-frequency components to produce a fused high-frequency component. The processing device 140 may generate the combined candidate target structure by fusing the low-frequency component of the candidate target structure and the fused high-frequency component. Merely by way of example, the weight of a first candidate target structure may be 0.9, and the weight of a second candidate target structure may be 0.1. The processing device 140 may combine a low-frequency component of the first candidate target structure, a high-frequency component of the first candidate target structure with a weight of 0.9, and a high-frequency component of the first candidate target structure with a weight of 0.1, to obtain a combined candidate target structure. The combined candidate target structure may be designated as the target structure.

In some embodiments, for each of at least two candidate target structures, the processing device 140 may filter the candidate target structure with different bandwidths to obtain a base frequency component and a high-frequency component. The base frequency component may be a low-frequency component of the candidate target structure.

In some embodiments, for each of at least two candidate target structures, the processing device 140 may perform one or more rounds of decomposition to the candidate target structure to generate a high-frequency component and a low-frequency component after each round of decomposition. In some embodiments, the decomposition may be a pyramid decomposition. After a round of decomposition, the image data of the candidate target structure may be divided into one layer including a high-frequency component and a low-frequency component. Merely by way of example, when performing a three-level pyramid decomposition on the candidate target structure, the candidate target structure may be decomposed three times. After the first pyramid decomposition, the high-frequency component of the first level and the low-frequency component of the first level may be obtained respectively. The low-frequency component of the first level may be the input of the second pyramid decomposition, and so on. The low-frequency component corresponding to each level may be as the input of the next level of the pyramid decomposition. After three rounds of pyramid decomposition, the high-frequency components of three levels and the low-frequency components of three levels of the candidate target structure may be obtained.

In some embodiments, the processing device 140 may obtain the low-frequency component after the first round of pyramid decomposition of the candidate target structure having a highest similarity among a plurality of similarities between the plurality of candidate target structures and the structure template and determine the low-frequency component as a base frequency of the combined candidate target structure. In some embodiments, the processing device 140 may obtain low-frequency components of two or more of the at least two candidate target structures after the first round of pyramid decomposition and combine the low-frequency components to produce a fused low-frequency component. The processing device 140 may determine the fused low-frequency component as a base frequency of the combined candidate target structure. The two or more of the at least two candidate target structures may be selected based on the similarity. In some embodiments, the processing device 140 may obtain low-frequency components of the at least two candidate target structures and fuse the low-frequency components to produce a fused high-frequency component. The processing device 140 may determine the fused low-frequency component as a base frequency of the combined candidate target structure.

In some embodiments, the processing device 140 may obtain high-frequency components of each of the at least two candidate target structures after one round of pyramid decomposition. The processing device 140 may combine the high-frequency components of the at least two candidate target structures to produce a fused high-frequency component. In some embodiments, the high-frequency components of the at least two candidate target structures may be generated after the same round of pyramid decomposition. The high-frequency components generated after the round of pyramid decomposition may indicate the edge features of the candidate target structure. In some embodiments, the processing device 140 may determine the weights of the high-frequency components of at least two candidate target structures based on the similarity. The weight may be positively correlated with the similarity. The processing device 140 may combine the base frequency of the combined candidate target structure and the fused high-frequency component to generate the combined candidate target structure.

In some embodiments, for candidate target structures of different types, the count and type decomposition round(s) may be different or the same. For a candidate target structure of a heart, the decomposition may include three or four rounds. For a candidate target structure of a spine, the decomposition may include two or three rounds. For a candidate target structure of a lung, the decomposition may include three or four rounds. In some embodiments, the high-frequency component generated after the last round of the decomposition may indicate the edge features of the candidate target structure.

In some embodiments, the processing device 140 may combine the high-frequency components of one level of the at least two candidate target structures. In some embodiments, the processing device 140 may combine the high-frequency components of one level of the at least two candidate target structures according to their respective weight. In some embodiments, the level may be the highest level. Merely by way of example, when performing a three-level pyramid decomposition on the at least two candidate target structures, the high-frequency components of the third level of the at least two candidate target structures may be combined. The combined high-frequency components of the at least two candidate target structures may be designated as the combined high-frequency components. The processing device 140 may combine the low-frequency component of the first level of the candidate target structure, having a highest similarity among a plurality of similarities between the plurality of candidate target structures and the structure template, and the combined high-frequency components to generate a combined candidate target structures.

In 630, the processing device 140 (e.g., the structure extraction module 220) may designate the combined candidate target structure as a target structure corresponding to the structure template.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 7 is a flowchart illustrating an exemplary process for generating a subtracted image by subtracting a combined mask image from a contrast image according to some embodiments of the present disclosure. In some embodiments, the process 700 may be implemented in the imaging system 100 illustrated in FIG. 1. For example, the process 700 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 700 presented below are intended to be illustrative. In some embodiments, the process 700 may be accomplished with one or more additional operations not described, and/or without one or more of the operations discussed.

In 710, the processing device 140 (e.g., the image obtaining module 210) may obtain a contrast image of an object and a plurality of mask images of the object.

In some embodiments, the plurality of mask images may include at least one simulated mask image. The simulated mask image may be an image generated after a mask image (including a real mask image or a simulated image) is pixel-shifted based on the contrast image to match the contrast image. Details regarding generating the at least one simulated mask image may be found elsewhere in the present disclosure (e.g., the description in connection with FIG. 9).

In some embodiments, the plurality of mask images may include at least one real mask image and at least one simulated mask image.

Details regarding the contrast image and the real mask image may be found elsewhere in the present disclosure (e.g., the description in connection with FIG. 3).

In 720, the processing device 140 (e.g., the mask image determination module 240) may select at least two mask images from the plurality of mask images based on the contrast image.

In some embodiments, the processing device 140 may obtain the physiological parameters of the object when acquiring the contrast image and the plurality of mask images, and determine the at least two mask images based on the physiological parameters of the object. In some embodiments, the physiological parameters may be related to the heartbeat and/or respiration. In some embodiments, physiological parameters may be derived from one or more photoplethysmography (PPG) signals, electrocardiography (ECG) signals or ballistocardiogram (BCG) signals, respiratory movement, and other physiological signals. In some embodiments, the physiological parameters may include the amplitude, phase, characteristic point position (such as Q wave, R wave, and S wave in ECG signal, such as peak and trough in PPG signal), and period of one or more physiological signals. In some embodiments, one or more devices used to acquire the one or more physiological signals of the object may be placed outside the scanning area of the imaging device 110. In some embodiments, one or more signal acquisition components of the one or more devices may be placed on a part of the object's body, e.g., the fingers, wrists, ankles, arms, legs, and other positions of the object.

In some embodiments, the processing device 140 may obtain first physiological parameters of the object corresponding to the acquisition of the contrast image and second physiological parameters of the object corresponding to each of the plurality of mask images. Herein, the "first physiological parameters" and the "second physiological parameters" can the same or different, and can all be one or more of the "physiological parameters" described above. The processing device 140 may determine the at least two mask images according to a plurality of similarities (referred to as a plurality of similarities relating to physiological parameters) between the first physiological parameters and the plurality of second physiological parameters. In some embodiments, the physiological parameters may include at least one of the amplitude of the physiological signal, the position of the physiological signal in a cycle, and a distance between the position of the physiological signal and the feature point, and so on.

In some embodiments, the processing device 140 may determine a mask image having the highest similarity among the plurality of similarities. The mask image may be used to generate the subtracted image without combining with one or more other mask images.

In some embodiments, the processing device 140 may determine the at least two mask images based on the plurality of similarities relating to physiological parameters and a similarity threshold. In some embodiments, the processing device 140 may determine a mask image having a similarity relating to physiological parameters larger than the similarity threshold as one of the at least two mask images. In some embodiments, the processing device 140 may rank, from high to low, the plurality of mask images according to the plurality of similarities relating to physiological parameters. In some embodiments, the processing device 140may determine two or more mask images with the top N (e.g., an integer 2-10 ) high similarities relating to physiological parameters as the at least two mask images.

In some embodiments, the processing device 140 may select the at least two mask images from the plurality of mask images based on the heartbeat status of the object. In some embodiments, the processing device 140 may determine a heartbeat status of the object corresponding to each of the plurality of mask images and a heartbeat status of the object corresponding to the contrast image. The processing device 140 may select, from the plurality of mask images, the at least two mask images corresponding to heartbeat status that is the same as or substantially similar to the heartbeat status of the object corresponding to the contrast image.

In some embodiments, the processing device 140 may determine image acquisition frequencies of the plurality of mask images and the contrast image and a cardiac cycle of the object. The processing device 140 may select, from the plurality of mask images, based on the image acquisition frequencies of the plurality of mask images and the contrast image and a cardiac cycle of the object, the at least two mask images corresponding to heartbeat status that is the same as or substantially similar to the heartbeat status of the object corresponding to the contrast image.

Details regarding selecting the at least two mask images from the plurality of mask images based on the heartbeat status or the cardiac cycle may be found elsewhere in the present disclosure (e.g., the description in connection with FIG. 13).

In some embodiments, the processing device 140 may determine a plurality of similarities between the contrast image and the plurality of mask images and select the at least two mask images from the plurality of mask images. The similarity calculation method may include Euclidean distance, gradient similarity, Pearson correlation coefficient, cosine distance, Hamming distance, structural similarity, subtraction histogram, entropy correlation coefficient, cross-correlation coefficient, and so on. It should be noted that the similarity between the contrast image and the plurality of mask images (and the similarity between the structure template and each of the plurality of candidate target structures) may be determined by one of the similarity calculation methods, or may be determined by two or more of the similarity calculation methods.

In some embodiments, the processing device 140 may determine the similarity between the contrast image and each of the plurality of mask images according to the Pearson correlation coefficient. The Pearson correlation coefficient may reflect the linear correlation degree between two random variables, and so the Pearson correlation coefficient may be used to judge the Pearson correlation degree between two variables. The Pearson correlation is also called product difference correlation or matrix correlation. The Pearson correlation coefficient may be realized by MATLAB. Specifically, when the variables in two images are linear correlated, the Pearson correlation coefficient may show the linear correlation degree of the two images. A large absolute value of the Pearson correlation coefficient may indicate a strong correlation, and a small absolute value of the Pearson correlation coefficient may indicate a weak correlation. The processing device 140 may determine the absolute value of the Pearson correlation coefficient of the variables in the contrast image and each of the plurality of mask images to determine the correlation between the mask image and the contrast image. The processing device 140 may determine the similarity between the contrast image and each of the plurality of mask images based on the plurality of absolute values of the Pearson correlation coefficients. In some embodiments, the processing device 140 may select, from two or more candidate mask images, the mask image with the strongest correlation with the contrast image as the target mask image. In some embodiments, to ensure accuracy, the scatter diagram of the contrast image and each mask image may be drawn. The processing device 140 may determine the correlation between the contrast image and each mask image based on the absolute value of the Pearson correlation coefficient and the scatter diagram. Similarly, the processing device 140 (e.g., the structure extraction module 220) may also determine the similarity between the structure template and each of the plurality of candidate target structures according to the Pearson correlation coefficient.

In some embodiments, the processing device 140 may determine the similarity between the contrast image and each of the plurality of mask images according to the cross-correlation coefficient. The cross-correlation coefficient may be based on Gaussian distribution, and the cross-correlation coefficient or the mutual information may be used as the basis for analyzing the linear correlation degree between variables. In some embodiments, the cross-correlation coefficient and the mutual information may be equivalent, and there may be a conversion formula between the cross-correlation coefficient and the mutual information. When the cross-correlation coefficient between two variables is zero, it may indicate that the two variables are independent of each other and the mutual information may be 0. When the cross-correlation coefficient is ±1\pm1±1, it may indicate that the two variables may be completely correlated and the mutual information is infinite. The processing device 140 may determine the cross-correlation coefficient of the variables in the contrast image and each of the plurality of mask images. The processing device 140 may determine the similarity between the contrast image and each of the plurality of mask images based on the plurality of cross-correlation coefficients. In some embodiments, the processing device 140 may select, from two or more candidate mask images, the mask image with the highest cross-correlation coefficient as the target mask image. Similarly, the processing device 140 (e.g., the structure extraction module 220) may also determine the similarity between the structure template and each of the plurality of candidate target structures according to the cross-correlation coefficient.

In some embodiments, the processing device 140 may determine the similarity between the contrast image and each of the plurality of mask images according to the subtraction histogram (referred to as maximum subtraction histogram energy). The processing device 140 may convert the contrast image and each of the plurality of mask images into gray histograms. The horizontal axis of a gray histogram is the gray value (for example, 0 - 255), and the vertical axis of the gray histogram is the number or proportion of pixels with the same gray value. In some embodiments, the processing device 140 may determine the similarity between the contrast image and each of the plurality of mask images according to the similarity between the gray histogram converted by the contrast image and the gray histogram converted by each of the plurality of mask images. In some embodiments, the processing device 140 may determine the histogram coincidence between the gray histogram converted by the contrast image and the gray histogram converted by each of the plurality of mask images and determine the similarity between the contrast image and each of the plurality of mask images based on the histogram coincidence. In some embodiments, the processing device 140 may subtract the gray histogram of a mask image from the gray histogram of the contrast image to obtain a subtracted gray histogram. In the subtracting process, the horizontal axis of the gray histogram is fixed, and for each gray value in the horizontal axis, the number of pixels of the mask image at the gray value is subtracted from the number of pixels of the contrast image at the same gray value. The processing device 140 may determine the similarity between the contrast image and each of the plurality of mask images according to the subtracted gray histogram. The number of pixels and/or the corresponding gray value in the subtracted gray histogram may be used to determine the similarity. Similarly, the processing device 140 (e.g., the structure extraction module 220) may also determine the similarity between the structure template and each of the plurality of candidate target structures according to the subtraction histogram.

In some embodiments, the processing device 140 may determine the similarity between the contrast image and each of the plurality of mask images according to the gradient similarity. For each of the plurality of mask images, the processing device 140 may subtract the pixel matrix corresponding to the mask image from the pixel matrix corresponding to the contrast image to obtain the pixel matrix corresponding to a template image, such as matrix [m, n]. The processing device 140 may process the pixel matrix [m, n] corresponding to the template image in steps of n (for example, a natural number within 1-10). In some embodiments, when the size of the step is 1, the processing device 140 may subtract the pixel value of the n-1-th column (or the m-1-th row) from the pixel value (such as gray value) of the n-th column (or the m-th row) to obtain a gradient matrix of [m-1, n-1]. The processing device 140 may sum the gradient matrix [m-1, n-1] to obtain the gradient value of the template image. The processing device 140 may determine the similarity between the contrast image and each of the plurality of mask images according to the gradient value of the template image obtained based on the contrast image and each of the plurality of mask images. Similarly, the processing device 140 (e.g., the structure extraction module 220) may also determine the similarity between the structure template and each of the plurality of candidate target structures according to the gradient similarity.

In some embodiments, the processing device 140 may determine the at least two mask images based on the plurality of similarities between the contrast image and the plurality of mask images. In some embodiments, the processing device 140 may determine a mask image having a similarity larger than the similarity threshold as one of the at least two mask images. In some embodiments, the processing device 140 may rank, from high to low, the plurality of mask images according to the plurality of similarities. In some embodiments, the processing device 140 may determine two or more mask images with the top N (e.g., an integer 2-10 ) high similarities as the at least two mask images.

In 730, the processing device 140 (e.g., the combination module 230) may obtain high-frequency components and low-frequency components of each of the at least two mask images.

In some embodiments, the high-frequency component may be related to a region of interest in the mask image. In some embodiments, the region of interest may be blood vessel. In some embodiments, the high-frequency component may be related to the motion artifact. In some embodiments, the low-frequency components may be related to other regions in the mask image except for the region of interest. In some embodiments, the other regions may be bones, muscles, and so on.

In some embodiments, for each of at least two mask images, the processing device 140 may filter the mask image with different bandwidths to obtain a base frequency component and a high-frequency component. The base frequency component may be a low-frequency component of the mask image.

In some embodiments, for each of at least two mask images, the processing device 140 may perform one or more rounds of decomposition to the mask image to generate a high-frequency component and a low-frequency component after each round of decomposition. In some embodiments, the decomposition may be a pyramid decomposition. After a round of decomposition, the image data of the mask image may be divided into one layer including a high-frequency component and a low-frequency component. Merely by way of example, when performing a three-level pyramid decomposition on the mask image, the mask image may be decomposed three times. After the first pyramid decomposition, the high-frequency component of the first level and the low-frequency component of the first level may be obtained respectively. The low-frequency component of the first level may be the input of the second pyramid decomposition, and so on. The low-frequency component corresponding to each level may be as the input of the next level of the pyramid decomposition. After three rounds of pyramid decomposition, the high-frequency components of three levels and the low-frequency components of three levels of the mask image may be obtained.

In 740, the processing device 140 (e.g., the combination module 230) may generate a combined mask image by fusing a low-frequency component of one image of the at least two mask images and the high-frequency components of the at least two mask images.

In some embodiments, the processing device 140 may combine the low-frequency component of one or more mask images of the at least two mask images and the high-frequency components of each of the at least two mask images. In some embodiments, the processing device 140 may designate a low-frequency component of one mask image as a base frequency. In some embodiments, the mask image may have the highest similarity among the at least two similarities between the contrast image and the at least two mask images. In some embodiments, the mask image may have the highest similarity relating to physiological parameters among the at least two similarities relating to physiological parameters between the first physiological parameters of the contrast image and the plurality of second physiological parameters of the at least two mask images. The processing device 140 may obtain high-frequency components of the at least two mask images and fuse the high-frequency components to produce a fused high-frequency component. The processing device 140 may combine the base frequency and the fused high-frequency component to obtain the combined mask image. In some embodiments, the processing device 140 may obtain low-frequency components of two or more mask images of the at least two mask images and combine the low-frequency components to produce a fused low-frequency component. The at least two mask images of the at least two mask images may be selected based on the similarity or the similarities relating to physiological parameters. The processing device 140 may obtain high-frequency components of the at least two mask images and fuse the high-frequency components to produce a fused high-frequency component. The processing device 140 may combine the fused low-frequency component and the fused high-frequency component to obtain the combined mask image. In some embodiments, the processing device 140 may combine low-frequency components of the at least two mask images to produce a fused low-frequency component, combine high-frequency components of the at least two mask images to produce a fused high-frequency component, and combine the fused low-frequency component and the fused high-frequency component to obtain the combined mask image.

In some embodiments, the low-frequency components and the high-frequency components may be generated by filtering the mask images with different bandwidths. In some embodiments, the low-frequency components and the high-frequency components may be generated by performing one or more rounds of decomposition on the mask images.

In some embodiments, the processing device 140 may obtain the low-frequency component after the first round of pyramid decomposition of the mask image having a highest similarity among a plurality of similarities between the plurality of mask image and the contrast image and determine the low-frequency component as a base frequency of the combined mask image. In some embodiments, the processing device 140 may obtain low-frequency components of at least two of the at least two mask images after the first round of pyramid decomposition and combine the low-frequency components to produce a fused low-frequency component. The processing device 140 may determine the fused low-frequency component as a base frequency of the combined mask image. The at least two of the at least two mask images may be selected based on the similarity. In some embodiments, the processing device 140 may obtain low-frequency components of the at least two mask images and fuse the low-frequency components to produce a fused high-frequency component. The processing device 140 may determine the fused low-frequency component as a base frequency of the combined mask image.

In some embodiments, the processing device 140 may obtain high-frequency components of each of the at least two mask images after one round of pyramid decomposition. The processing device 140 may combine the high-frequency components of the at least two mask images to produce a fused high-frequency component. In some embodiments, the high-frequency components of the at least two mask images may be generated after the same round of pyramid decomposition. The high-frequency components generated after the one more rounds of pyramid decomposition may indicate the edge features of the region of interest in the mask images. In some embodiments, the processing device 140 may determine the weights of the high-frequency components of the at least two mask images based on the similarity. The weight may be positively correlated with the similarity. The processing device 140 may combine the base frequency of the combined mask image and the fused high-frequency component to generate the combined mask images.

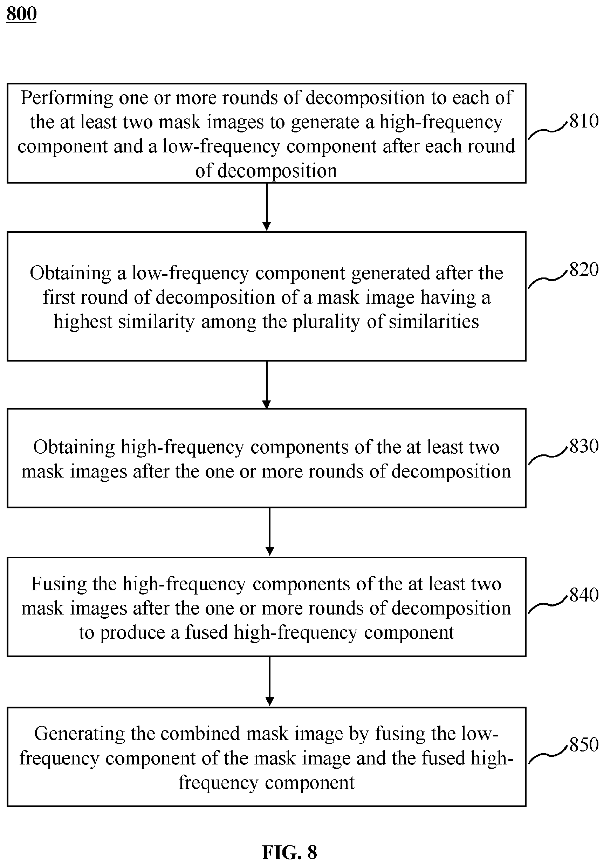

Details regarding generating a combined mask image based on performing one or more rounds of decomposition on the mask images may be found elsewhere in the present disclosure (e.g., the description in connection with FIG. 8).

In some embodiments, the processing device 140 (e.g. the structure extraction module 220 or the combination module 230) may generate the combined mask image by extracting a plurality of target structures from the at least two mask images using the one or more preset processing algorithms. The combined mask image may include the plurality of target structures. Details regarding the plurality of target structures and extracting a plurality of target structures using the one or more preset processing algorithms may be found elsewhere in the present disclosure (e.g., the description in connection with FIG. 3).

In some embodiments, the processing device 140 (e.g. the structure extraction module 220 or the combination module 230) may extract a plurality of candidate target structures from the at least two mask images by processing the at least two mask images with the one or more preset processing algorithms. The processing device 140 (e.g. the structure extraction module 220 or the combination module 230) may determine the plurality of target structures based on the plurality of candidate target structures. Details regarding extracting the plurality of candidate target structures using the one or more preset processing algorithms and determining the plurality of target structures based on the plurality of candidate target structures may be found elsewhere in the present disclosure (e.g., the description in connection with FIG. 4).

In some embodiments, the processing device 140 (e.g. the structure extraction module 220 or the combination module 230) may determine, from the contrast image, a plurality of structure templates corresponding to the plurality of target structures by using the one or more preset processing algorithms. The processing device 140 (e.g. the structure extraction module 220 or the combination module 230) may determine, based on the plurality of candidate target structures and the plurality of structure templates, the plurality of target structures, each of the plurality of target structures corresponding to one of the plurality of structure templates. Details regarding determining the plurality of structure templates and determining the plurality of target structures based on the plurality of candidate target structures may be found elsewhere in the present disclosure (e.g., the description in connection with FIG. 5).

In some embodiments, for each of the plurality of structure templates, the processing device 140 (e.g. the structure extraction module 220 or the combination module 230) may determine a plurality of similarities, each of the plurality of similarities being a similarity between the structure template and one of a plurality of candidate target structures corresponding to the structure template. The processing device 140 (e.g. the structure extraction module 220 or the combination module 230) may determine, based on the plurality of similarities, a plurality of weights corresponding to the plurality of candidate target structures corresponding to the structure template. The processing device 140 (e.g. the structure extraction module 220 or the combination module 230) may determine a target structure corresponding to the structure template by combining the plurality of candidate target structures corresponding to the structure template based on the plurality of weights. Details regarding the process of determining a target structure corresponding to the structure template by combining the plurality of candidate target structures corresponding to the structure template based on the plurality of weights may be found elsewhere in the present disclosure (e.g., the description in connection with FIG. 6).

In 750, the processing device 140 (e.g., the subtracting module 270) may generate a subtracted image by subtracting the combined mask image from the contrast image.

In some embodiments, the subtracted image may include the region of the object including the contrast agent. In some embodiments, the subtracted image may clearly show tissues such as blood vessels or vascular. The subtracted image may include an angiography image, a cardiography image, a salpingography image, and an arthrography image. In some embodiments, the operation subtracting may include subtracting the values of the pixels in the combined mask image from the values of the pixels in the contrast agent. In some embodiments, the operation subtracting may include subtracting the gray values of the pixels in the combined mask image from the gray values of the pixels in the contrast agent. In some embodiments, the number of the pixels in the combined mask image is the same as the number of the pixels in the contrast image.

In some embodiments, before subtracting the combined mask image from the contrast image, the processing device 140 (e.g., the image processing module 260) may register the combined mask image with the contrast image. In some embodiments, the processing device 140 (e.g., the image processing module 260) may perform pixel-shifting on the combined mask image to match the contrast image or register the combined mask image with the contrast image. Details regarding performing pixel-shifting on the combined mask image (or referred to the mask image) to match the contrast image may be found elsewhere in the present disclosure (e.g., the description in connection with FIG. 14).

In some embodiments, the combined mask image may include the plurality of target structures. The generating the subtracted image by subtracting the combined mask image from the contrast image may include generating the subtracted image by performing a plurality of subtracting operations to subtract the plurality of target structures from the contrast image. The processing device 140 (e.g., the subtracting module 270) may generate the subtracted image by subtracting the plurality of target structures from the contrast image with the plurality of subtracting operations. Details regarding subtracting the plurality of target structures from the contrast image with the plurality of subtracting operations may be found elsewhere in the present disclosure (e.g., the description in connection with FIG. 3).

In some embodiments, the subtracted image obtained after the subtracting operation or the plurality of subtracting operations may be designated as a final subtracted image.

In some embodiments, the subtracted image obtained after the plurality of subtracting operations may be post-processed to obtain a final subtracted image. The post-process operation may include LUT curve transformation, multi-scale enhancements, and so on. Details regarding the post-process operation may be found elsewhere in the present disclosure (e.g., the description in connection with FIG. 13).

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 8 is a flowchart illustrating an exemplary process for generating a combined mask image according to some embodiments of the present disclosure. In some embodiments, the process 800 may be implemented in the imaging system 100 illustrated in FIG. 1. For example, the process 800 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 800 presented below are intended to be illustrative. In some embodiments, the process 800 may be accomplished with one or more additional operations not described, and/or without one or more of the operations discussed.

In 810, the processing device 140 (e.g., the combination module 230) may perform one or more rounds of decomposition to each of the at least two mask images to generate a high-frequency component and a low-frequency component after each round of decomposition.

In some embodiments, the processing device 140 may use the Gaussian kernel function to downsample each of at least two mask images. In some embodiments, the processing device 140 may convert a 1028*1028 pixel matrix of the mask image into a 256*256 pixel matrix. After a plurality of downsampling operations, a multi-layer pixel matrix similar to a pyramid distribution may be obtained.

In some embodiments, the pyramid decomposition may include low pass filtering, down sampling, up sampling, and band-pass filtering. After a round of pyramid decomposition, the image data of the mask image may be divided into one layer including a high-frequency component and a low-frequency component. Merely by way of example, when performing a three-level pyramid decomposition on the mask image, the mask image may be decomposed three times. After the first pyramid decomposition, the high-frequency component of the first level and the low-frequency component of the first level may be obtained respectively. The low-frequency component of the first level may be the input of the second pyramid decomposition, and so on. The low-frequency component corresponding to each level may be as the input of the next level of the pyramid decomposition. After three rounds of pyramid decomposition, the high-frequency components of three levels and the low-frequency components of three levels of the mask image may be obtained.

In some embodiments, the one or more rounds of pyramid decomposition on the mask image may be four or five rounds. In some embodiments, the high-frequency component of the highest level may indicate the edge characteristics of the interest region (e.g. the blood vessel).

In 820, the processing device 140 (e.g., the combination module 230) may obtain a low-frequency component generated after the first round of decomposition of a mask image having a highest similarity among the plurality of similarities.

In some embodiments, the processing device 140 may select a mask image, from the at least two mask images, having the highest similarity or the highest similarity relating to physiological parameters. The processing device 140 may obtain the low-frequency component generated after the first round of decomposition of the mask image. The processing device 140 may determine the low-frequency component as a base frequency of the combined mask image.

In 830, the processing device 140 (e.g., the combination module 230) may obtain high-frequency components of the at least two mask images after the one or more rounds of decomposition.

In some embodiments, the processing device 140 may obtain the high-frequency components of the same level of the at least two mask images. In some embodiments, the high-frequency components may include the edge characteristics of the interest region. In some embodiments, the high-frequency components may be the high-frequency components of the at least two mask images after four or five rounds of pyramid decomposition.

In 840, the processing device 140 (e.g., the combination module 230) may fuse the high-frequency components of the at least two mask images after the one or more rounds of decomposition to produce a fused high-frequency component.

In some embodiments, the processing device 140 may obtain the similarities (including the similarity or the similarity relating to physiological parameters) between the contrast image and the at least two mask images. The processing device 140 may determine the weights of the high-frequency components according to the similarities. The weight and the similarity are positively correlated.

In some embodiments, the at least two mask images may be two mask images, e.g., the first mask image and the second mask image. The first mask image and the second mask image may include the first high-frequency component and the second high-frequency component. The weights of the first high-frequency component and the second high-frequency component are P and Q. The fused high-frequency component may be a sum of the first high-frequency component multiplied by P/(P+Q) and the second high-frequency component multiplied by Q/(P+Q). In some embodiments, the at least two mask images may be two more mask images. The calculation of the fused high-frequency component is similar.

In 850, the processing device 140 (e.g., the combination module 230) may generate the combined mask image by fusing the low-frequency component of the mask image and the fused high-frequency component.

In some embodiments, the combined mask image may be based on the low-frequency component of the most similar mask image and the fused high-frequency component of at least two mask images with high similarities that can reflect the edge characteristics of the region of interest (e.g., the part containing the contrast agent). Thus, the combined mask image may be a mask image with high similarity to the contrast image and thereby reducing the influence of motion artifacts, generated between the time interval acquiring the contrast image and the mask image, on the subtracted image.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure.

FIG. 9 is a flowchart illustrating an exemplary process for generating at least one simulated mask image according to some embodiments of the present disclosure. In some embodiments, the process 900 may be implemented in the imaging system 100 illustrated in FIG. 1. For example, the process 900 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 900 presented below are intended to be illustrative. In some embodiments, the process 900 may be accomplished with one or more additional operations not described, and/or without one or more of the operations discussed.

In 910, the processing device 140 (e.g., the mask image simulation module 250) may obtain a mask image to be processed to a simulated mask image. In some embodiments, the mask image may be a real mask image. In some embodiments, the mask image may be a simulated mask image.

In 920, the processing device 140 (e.g., the mask image simulation module 250) may obtain a simulated-used contrast image. In some embodiments, the simulated-used contrast image may be used to simulate the mask image based on the simulated-used contrast image to generate the simulated mask image corresponding to the simulated-used contrast image.

In 930, the processing device 140 (e.g., the mask image simulation module 250) may perform pixel-shifting on the mask image to match the simulated-used contrast image based on the simulated-used contrast image to generate the at least one simulated mask image.

In some embodiments, the processing device 140 may determine feature points on the mask image and the simulated-used contrast image. Herein, the term "feature point" refers any specific point on an image that can be used to characterize/locate the image or characterize/locate any object or structure on the image. The feature points on the mask image may correspond to the feature points on the simulated-used contrast image. In some embodiments, the feature points may include one or more anatomical feature points (e.g., a point at the edge of a blood vessel, a bifurcation of a blood vessel branch, and so on). In some embodiments, the processing device 140 may divide the mask image and the simulated-used contrast image into a plurality of blocks, for example, 6 * 9 blocks. For each of the plurality of blocks, the feature points may include a center point of the block and one or more points on frames of the block.

In some embodiments, the processing device 140 may use the above feature points as control points to match the mask image with the simulated-used contrast image. In the matching process, the processing device 140 may obtain the displacements of the control points, and obtain the displacement of each pixel point on the mask image based on the displacements of the control points. In some embodiments, the processing device 140 may distort the entire mask image by performing an affine transformation based on the displacements of the control points, so that the entire mask image may be pixel-shifted. The number of feature points or control points is positively correlated with the accuracy of the matching between the mask image and the simulated-used contrast image. The cost of computation may grow with the increase of the number of feature points or control points. The number of feature points or control points may be determined according to the accuracy demand and the cost of computation.

In some embodiments, the processing device 140 may use other pixel-shifting methods to perform pixel-shifting on the mask image to match the simulated-used contrast image, for example, a pixel-shifting model.

In some embodiments, the processing device 140 may iteratively generate a plurality of simulated mask images based on one real mask image and a plurality of contrast images acquired successively by a medical device. In some embodiments, after obtaining a first contrast image, the processing device 140 may perform pixel-shifting on the real mask image to match the first contrast image based on the first contrast image to generate a first simulated mask image. In some embodiments, after obtaining a second contrast image, the processing device 140 may perform pixel-shifting on the first simulated mask image to match the second contrast image based on the second contrast image to generate a second simulated mask image. Similarly, after obtaining a N-th contrast image, the processing device 140 may perform pixel-shifting on a N-1-th simulated mask image to match the N-th contrast image based on the N-th contrast image to generate a N-th simulated mask image. N may be an integer, for example, 2, 3, 4, 5,..., 100, and so on.

In some embodiments, the first simulated mask image, the second simulated mask image, ..., and the N-th simulated mask image may compose a candidate mask image set. In some embodiments, the candidate mask image set may include the real mask image. In some embodiments, the processing device 140 may select, from the candidate mask image set, at least two mask images according to the similarity between a contrast image (e.g., a N+1-th contrast image) and each mask image of the candidate mask image set to generate the combined mask image.

It should be noted that the above description is merely provided for the purposes of illustration, and not intended to limit the scope of the present disclosure. For persons having ordinary skills in the art, multiple variations and modifications may be made under the teachings of the present disclosure.

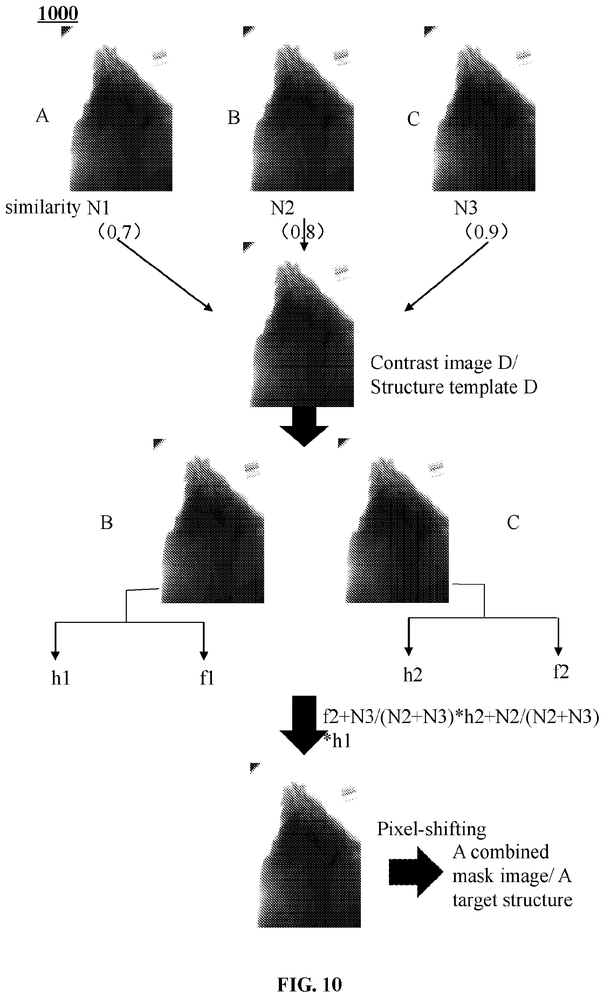

FIG. 10 is a flowchart illustrating an exemplary process for generating a combined mask image or a target structure according to some embodiments of the present disclosure. In some embodiments, the process 1000 may be implemented in the imaging system 100 illustrated in FIG. 1. For example, the process 1000 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 1000 presented below are intended to be illustrative. In some embodiments, the process 1000 may be accomplished with one or more additional operations not described, and/or without one or more of the operations discussed.

The processing device 140 (e.g., the image obtaining module 210) may obtain three mask images (A, B, and C) and a contrast image D. The similarities N1, N2, N3 between the contrast image D and the mask images A, B, and C may be 0.7, 0.8, and 0.9, respectively. The processing device 140 (e.g., the mask image determination module 240) may select two mask images B and C with the top two high similarities. The processing device 140 (e.g., the combination module 230) may perform pyramid decomposition on the two mask images B and C to obtain a high-frequency component h1 and a base-frequency component f1 of the mask image B and a high-frequency component h2 and a base-frequency component f2 of the mask image C. The processing device 140 (e.g., the combination module 230) may determine the base-frequency component f2 of the mask image C with the highest similarity as a base-frequency component of the combined mask image, combine the high-frequency component h1 of the mask image B and the high-frequency component h2 of the mask image C according to their respective weight to generate a high-frequency component of the combined mask image, and combine the base-frequency component of the combined mask image and the high-frequency component of the combined mask image to generate the combined mask image. For example, the combined mask image may be obtained according to equation f2+N3/(N2+N3)*h2+N2/(N2+N3)*h1. In some embodiments, the processing device 140 (e.g., the image processing module 260) may perform pixel-shifting on the combined mask image to match the contrast image D.

In some embodiments, the processing device 140 (e.g., the structure extraction module 220) may obtain three candidate target structures (A, B, and C) and a structure template D. Similarly, the processing device 140 (e.g., the structure extraction module 220 or the combination module 230) may obtain a combined candidate target structure (or referred to a target structure) based on the candidate target structures (A, B, and C) and the structure template D. In some embodiments, the processing device 140 (e.g., the structure extraction module 220 or the image processing module 260) may perform pixel-shifting on the combined candidate target structure to match the structure template D.

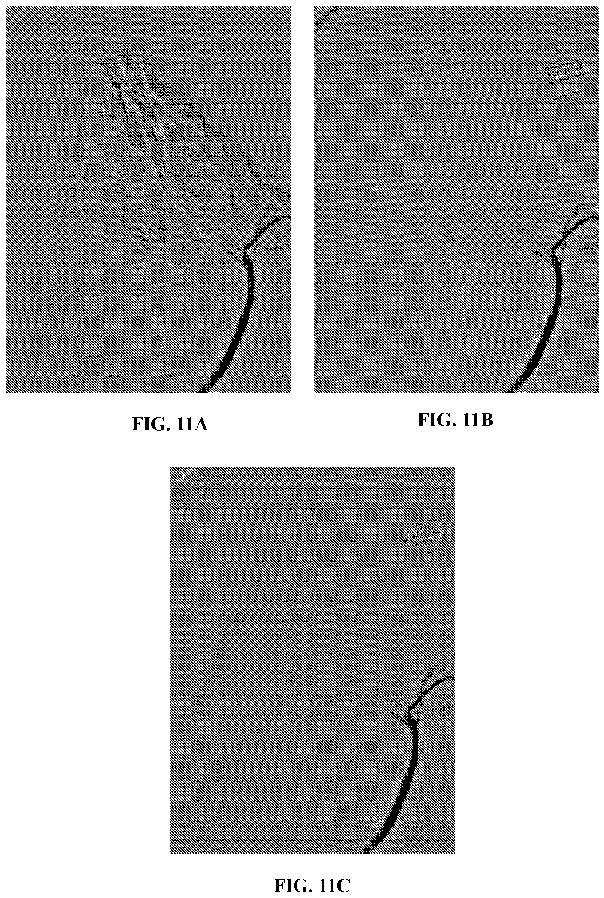

FIGs. 11A-C are schematic diagrams illustrating a group of exemplary subtracted images according to some embodiments of the present disclosure. The subtracted image in FIG. 11A may be generated by subtracting a mask image from a contrast image. The subtracted image in FIG. 11B may be generated by subtracting a combined mask image from the contrast image. Details regarding the process of generating the combined mask image may be found elsewhere in the present disclosure (e.g., the description in connection with FIGs. 7 and 8). The subtracted image in FIG. 11C may be generated by performing pixel-shifting on the combined mask image to match the contrast image, and subtracting the pixel-shifted combined mask image from the contrast image. According to FIGs. 11A and 11B, compared with the subtracted image generated based on the mask image, the subtracted image generated based on the combined mask image may have fewer motion artifacts. According to FIGs. 11B and 11C, compared with the subtracted image generated without pixel-shifting operation, the motion artifacts in the subtracted image generated with pixel-shifting operation may be further reduced.

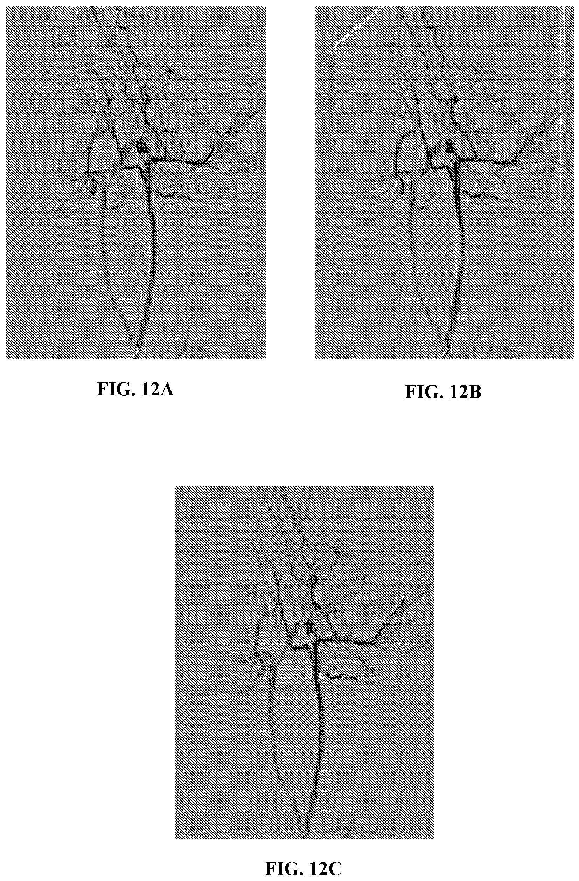

FIGs. 12A-C are schematic diagrams illustrating another group of exemplary subtracted images according to some embodiments of the present disclosure. The subtracted image in FIG. 12A may be generated by subtracting a mask image from a contrast image. The subtracted image in FIG. 12B may be generated by performing pixel-shifting on the mask image to match the contrast image, and subtracting the pixel-shifted mask image from the contrast image. The subtracted image in FIG. 12C may be generated by subtracting a combined mask image from the contrast image. Details regarding the process of generating the combined mask image may be found elsewhere in the present disclosure (e.g., the description in connection with FIGs. 7 and 8). According to FIGs. 12B and 12C, compared with the subtracted image generated based on the pixel-shifted mask image, the subtracted image generated based on the combined mask image may have fewer motion artifacts.

FIG. 13 is a flowchart illustrating an exemplary process for generating a subtracted image based on a target mask image and a contrast image according to some embodiments of the present disclosure. In some embodiments, the process 1300 may be implemented in the imaging system 100 illustrated in FIG. 1. For example, the process 1300 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 1300 presented below are intended to be illustrative. In some embodiments, the process 1300 may be accomplished with one or more additional operations not described, and/or without one or more of the operations discussed.

In 1310, the processing device 140 (e.g., the image obtaining module 210) may obtain a contrast image of an object and at least two mask images of the object.

Details regarding the contrast image and the mask image may be found elsewhere in the present disclosure (e.g., the description in connection with FIG. 3). In some embodiments, the object may include a whole heart or part of a heart.

In 1320, the processing device 140 (e.g., the mask image determination module 240) may determine a heartbeat status of the object corresponding to each of the at least two mask images and a heartbeat status of the object corresponding to the contrast image.

The heartbeat status may be the state of the heart presented along with the systolic and diastolic movements. In some embodiments, the heartbeat status may be divided into at least two statuses according to the degree of contraction and relaxation of the heart in each cardiac cycle. In some embodiments, the heartbeat status may be divided into at least two statuses according to the total systolic time length corresponding to the systolic period and the total diastolic time length corresponding to the diastolic period. In some embodiments, the total systolic time length and the total diastolic time length may be divided according to the preset fixed time length to obtain a plurality of periods. The heart motion information in each of the plurality of periods may be determined as a heartbeat status. In other words, each of the plurality of periods may correspond to a heart heartbeat status. In some embodiments, the heartbeat status may be divided into at least two statuses according to the amplitude fluctuation range of the heart beating waveform of each cardiac cycle.

In some embodiments, the at least two mask images may be the mask images acquired in one cardiac cycle or two cardiac cycles of the object.

In 1330, the processing device 140 (e.g., the mask image determination module 240) may determine, based on the at least two mask images, at least one candidate mask image corresponding to heartbeat status that is the same as or substantially similar to the heartbeat status of the object corresponding to the contrast image.

In some embodiments, the at least one candidate mask image may correspond to a heartbeat status as same as or substantially similar to the heartbeat status of the contrast image. In some embodiments, two same heartbeat statuses may correspond to the same period of the plurality of periods. Two substantially similar heartbeat statuses may correspond to two adjacent heartbeat statuses in the plurality of periods.

In some embodiments, the processing device 140 may obtain the time information of the at least two mask images and the contrast image. The processing device 140 may determine whether each of the at least two mask images corresponds to a heartbeat status as same as or substantially similar to the heartbeat status of the contrast image. The time information may include the time when a medical device scanning the object to acquire the at least two mask images and the contrast image.

In some embodiments, the processing device 140 may obtain the image acquisition frequencies of the at least two mask images and the contrast image and a cardiac cycle of the object. The processing device 140 may determine whether each of the at least two mask images corresponds to a heartbeat status as same as or substantially similar to the heartbeat status of the contrast image based on the image acquisition frequencies of the at least two mask images and the contrast image and a cardiac cycle of the object. The processing device 140 may select, from the at least two mask images, based on the image acquisition frequencies of the at least two mask images and the contrast image and a cardiac cycle of the object.

In some embodiments, the acquisition frequency may be the number of the images that can be acquired in a unit of time. In some embodiments, the unit of time may be 1 millisecond, 2 millisecond, 5 millisecond, 10 millisecond, 30 millisecond, 1 second, 2 seconds, 5 seconds, 10 seconds, 30 seconds, 1 minute, 2 minutes, 5 minutes, and so on. The image acquisition frequency of the contrast image and the image acquisition frequency of the mask image may be the same or different. In some embodiments, the image acquisition frequency may be set according to the actual needs. In some embodiments, the image acquisition frequency may be set before acquiring the contrast image and the mask image.

The cardiac cycle may be a process of the cardiovascular system from the beginning of one heartbeat to the beginning of the next heartbeat. One contraction and one relaxation of the heart may constitute a cardiac cycle. The changes of ventricular pressure, ventricular volume, blood flow and valve activity in each phase of the cardiac cycle, and taking the diastolic and systolic activity of the ventricle as the center, the whole cardiac cycle operates according to eight phases. The eight phases may be isovolumic systole, rapid ejection, slow ejection, pre-diastole, isovolumic diastole, rapid filling, slow filling, and atrial systole.

In some embodiments, each phase in the cardiac cycle may be regarded as a heartbeat status and eight heartbeat statuses may be divided in each cardiac cycle. In some embodiments, two adjacent phases may be regarded as one heartbeat status and four heartbeat statuses may be divided in each cardiac cycle. The processing device 140 may determine whether the mask image and the contrast image are in the same or substantially similar heartbeat status by determining the phase of the mask image and the contrast image. In some embodiments, two substantially similar heartbeat statuses may be two adjacent heartbeat statuses. Each heartbeat status corresponds to a period in the cardiac cycle.

The time of a cardiac cycle may be determined by the heart rate. For example, if the heart rate is 75 beats/minute, the time to complete a cardiac cycle is 0.8s. The heart rate may be an important indicator to reflect the health level of human cardiovascular function.

In some embodiments, the heart rate may be detected by the microwave radar heartbeat recognition technology, the image capture heartbeat recognition technology, the visual image heartbeat recognition technology, and so on. The microwave radar heartbeat recognition technology may use the microwave radar to collect the heartbeat signal, divide the periodic signal sequence into discrete frames, extract the heartbeat using signal processing technologies, and obtain the heart rate value. The image capture heartbeat recognition technology may be a heart rate measurement method based on image capture. The image capture heartbeat recognition technology may obtain the feature vector T of the detection space and the threshold value of a conversion to binary image ε; obtain the video of heart rate detection; extract frame images F1, F2,..., Fx from the video; obtain the gray image Gx of Fx in the detection space; obtain the gray image Ry of the difference between Gx and G1; extract the variable area My of each vessel image; extract the value Ky of the variable area in the image; obtain the period Tr by extracting the variable eigenvalue from the value Ky of the variable area; obtain the heart rate HR. The visual image heartbeat recognition technology may include a LabVIEW-based face video non-contact real-time heart rate measurement system. The visual image heartbeat recognition technology may obtain the face image captured by a camera, separate the three primary colors of each frame image to generate the R (red), G (green), and B (blue) three-channel images, recognize the face by a skin color model, determine the ROI region of the face and extract the mean value of the G channel, eliminate the baseline drift of the signal and detect the peak of the signal using the wavelet transform, and finally get the measured heart rate. It is noted that the cardiac cycle of the object is a relatively stable cycle in a short time without intense exercise.

In some embodiments, the processing device 140 may select, from the at least two mask images, based on the image acquisition frequencies of the at least two mask images and the contrast image and the cardiac cycle of the object, the at least one candidate mask image corresponding to heartbeat status that is the same as or substantially similar to the heartbeat status of the object corresponding to the contrast image.

In some embodiments, the processing device 140 may determine the image acquisition time of each of the at least two mask images and the image acquisition time of the contrast image based on the image acquisition frequencies of the at least two mask images and the contrast image. The image acquisition time may be the time when a medical device scanning the object to acquire the mask image or the contrast image. The processing device 140 may determine the heartbeat status corresponding to the contrast image based on the image acquisition time of the contrast image and the period of each heartbeat status in the cardiac cycle. The processing device 140 may determine the heartbeat status corresponding to each of the at least two mask images based on the image acquisition time of the mask image and the period of each heartbeat status in the cardiac cycle. The processing device 140 may determine the at least one candidate mask image corresponding to heartbeat status that is the same as or substantially similar to the heartbeat status of the object corresponding to the contrast image based on the heartbeat status corresponding to the contrast image and the heartbeat status corresponding to each of the at least two mask images.

In some embodiments, there may be no mask image corresponding to heartbeat status that is the same as or substantially similar to the heartbeat status of the object corresponding to the contrast image. The processing device 140 may determine a mask image with an image acquisition time that is most close to the period of the heartbeat status corresponding to the contrast image as a candidate mask image. For each cardiac cycle, the processing device 140 may determine a target period corresponding to a heartbeat status that is the same as the heartbeat status corresponding to the contrast image. For each cardiac cycle, the processing device 140 may determine one more mask images in the cardiac cycle, and determine an absolute value of a distance between the image acquisition time of a mask image and a near end time point of the target period. The processing device 140 may select, from the at least two mask images, the mask image with the minimum absolute value of the distance as the candidate mask image or as the mask image corresponding to heartbeat status that is the same as or substantially similar to the heartbeat status of the object corresponding to the contrast image.

In some embodiments, the processing device 140 may determine the similarities between the contrast image and the at least two mask images. The processing device 140 may determine whether each of the at least two mask images corresponds to a heartbeat status as same as or substantially similar to the heartbeat status of the contrast image based on the similarities. Details regarding determining the similarities may be found in the present disclosure (e.g., the description in connection with FIG. 7). In some embodiments, when a similarity between the contrast image and a mask image is larger than or equal to a first threshold, the processing device 140 may determine that the mask image corresponds to a heartbeat status as same as the heartbeat status of the contrast image. In some embodiments, when a similarity between the contrast image and a mask image is smaller than the first threshold and larger than or equal to a second threshold, the processing device 140 may determine that the mask image corresponds to a heartbeat status substantially similar to the heartbeat status of the contrast image. The first threshold may be 0.90, 0.88, 0.85, 0.80, and so on. The second threshold may be 0.85, 0.83, 0.80, 0.77, 0.75, and so on. The first threshold may be different from the second threshold.

In some embodiments, the processing device 140 may obtain the physiological signal of the object when the medical device scans the object to acquire the at least two mask images and the contrast image. The processing device 140 may determine whether each of the at least two mask images corresponds to a heartbeat status as same as or substantially similar to the heartbeat status of the contrast image based on the physiological signal corresponding to the at least two mask images and the contrast image. The physiological signal may include at least one EEG signal, ECG signal, pulse signal, or signals extracted from other modal images.

In some embodiments, the processing device 140 may obtain the low-frequency information and the average high-frequency information of the high-frequency information of each of at least two mask images. The low-frequency information and the high-frequency information may include the low-frequency component and the high-frequency component. The processing device 140 may determine whether each of the at least two mask images corresponds to a heartbeat status as same as or substantially similar to the heartbeat status of the contrast image based on the low-frequency information and the average high-frequency information of each of at least two mask images.

In some embodiments, the processing device 140 may process the image information of the preset proportion in each of at least two mask images and determine whether each of the at least two mask images corresponds to a heartbeat status as same as or substantially similar to the heartbeat status of the contrast image based on the processed image information.

In some embodiments, before determining, based on the at least two mask images, the at least one candidate mask image corresponding to heartbeat status that is the same as or substantially similar to the heartbeat status of the object corresponding to the contrast image, the processing device 140 may pre-process the at least two mask images and the contrast image and determine, based on the at least two pre-processed mask images, the at least one candidate mask image corresponding to heartbeat status that is the same as or substantially similar to the heartbeat status of the object corresponding to the pre-processed contrast image. Through the pre-processing operation, some low-quality mask images may be filtered out, and provide fewer mask images to determine the at least one candidate mask image.

In some embodiments, after determining the at least one candidate mask image corresponding to heartbeat status that is the same as or substantially similar to the heartbeat status of the object corresponding to the contrast image, the processing device 140 may pre-process the at least one candidate mask image and the contrast image. Compared with pre-processing the at least two mask images before the at least one candidate mask image is determined, the number of mask images to be pre-processed may be larger.

In some embodiments, before determining the at least one candidate mask image, the processing device 140 may pre-process the at least two mask images and the contrast image and after determining the at least one candidate mask image, the processing device 140 may pre-process the at least one candidate mask image and the contrast image.

In some embodiments, the pre-processing operation may be used to initialize the mask image and the contrast image to better match the mask image and the contrast image. In some embodiments, the preprocessing operation may include log transformation, noise reduction processing, regularization processing, and so on. The noise reduction processing may include multi-scale noise reduction processing.

In some embodiments, the processing device 140 may perform log transformation on the mask image and the contrast image, and perform filter processing on the log-transformed mask image and the log-transformed contrast image.

Because the X-ray shows the energy distribution of exponential decay, the distribution information of the mask image and the contrast image may be more clearly reflected through log transformation. The X-ray itself may include a lot of noise, including impulse noise, Gaussian noise, etc. The processing device 140 may perform filter processing using at least one of the mean filter, Gaussian filter, bilateral filter, trilateral filter, and so on. After the filter processing, the mask image and the original filling image may match more accurately.

In some embodiments, the processing device 140 may perform filter processing on the mask image (or the log-transformed mask image) and the contrast image (or the log-transformed contrast image) using the adaptive trilateral filter to better retain the edge information. When performing filter processing using the bilateral filter, the gray value of and spatial distribution of the image itself may be taken into account, and thus the closer the distance, the greater the weight. Although the noise removal effect of the bilateral filter is good, the corresponding spatial structure information may be removed. Therefore, third weight information, i.e., the pulse weight, is added to form the trilateral filter. The pulse weight may be used to judge whether a point is an edge point and if the point is an edge point and the signal of the edge point is a pulse signal, then the bilateral filter coefficient may be increased to achieve better denoising ability.

In some embodiments, the processing device 140 may perform filter processing on the mask image and the contrast image, and perform log transformation on the filtered mask image and the filtered contrast image.

In 1340, the processing device 140 (e.g., the mask image determination module 240) may determine a target mask image corresponding to the contrast image based on the at least one candidate mask image.

In some embodiments, in the at least one candidate mask image, the target mask image may be a mask image having the highest matching degree with the contrast image. In some embodiments, the number of the at least one candidate mask image may be one. The only one candidate mask image may be determined as the target mask image. In some embodiments, the number of the at least one candidate mask image may be two or more. The target mask image corresponding to the contrast image may be selected from the at least one candidate mask image. In some embodiments, the number of the at least one candidate mask image may be two or more and the number of the candidate mask image corresponding to heartbeat status that is the same as the heartbeat status of the object corresponding to the contrast image may be zero. The target mask image corresponding to the contrast image may be selected from the at least one candidate mask image. In some embodiments, the number of the at least one candidate mask image may be two or more and the number of the candidate mask image corresponding to heartbeat status that is the same as the heartbeat status of the object corresponding to the contrast image may be one. The only one candidate mask image corresponding to heartbeat status that is the same as the heartbeat status of the object corresponding to the contrast image may be determined as the target mask image. In some embodiments, the number of the at least one candidate mask image may be two or more and the number of the candidate mask images corresponding to heartbeat status that is the same as the heartbeat status of the object corresponding to the contrast image may also be two or more. The target mask image corresponding to the contrast image may be selected from the at least two candidate mask images corresponding to heartbeat status that is the same as the heartbeat status of the object corresponding to the contrast image.

In some embodiments, one of two or more candidate mask images may be selected from the two or more candidate mask images as the target mask image. In some embodiments, the processing device 140 may select, from the two or more candidate mask images, at random one candidate mask image as the target mask image. In some embodiments, the processing device 140 may select, from the two or more candidate mask images, one candidate mask image having less motion artifact as the target mask image. In some embodiments, the processing device 140 may select, from the two or more candidate mask images, one candidate mask image as the target mask image according to the plurality of image acquisition times of the two or more candidate mask images and the contrast image and the cardiac cycle of the object.

In some embodiments, the processing device 140 may select, from the two or more candidate mask images, one candidate mask image as the target mask image according to the plurality of similarities between the contrast image and the two or more candidate mask images. The processing device 140 may select, from the two or more candidate mask images, one candidate mask image having the highest similarity as the target mask image. The similarity calculation method may include Euclidean distance, gradient similarity, Pearson correlation coefficient, cosine distance, Hamming distance, structural similarity, subtraction histogram, entropy correlation coefficient, cross-correlation coefficient, and so on. Details regarding determining the similarity between the mask image and the contrast image may be found elsewhere in the present disclosure (e.g., the description in connection with FIG. 7).

In some embodiments, the processing device 140 may select at least two mask images from the at least one candidate mask image based on the contrast image. Details regarding selecting at least two mask images from the at least one candidate mask image based on the contrast image may be found elsewhere in the present disclosure (e.g., the description in connection with FIG. 7). The processing device 140 may obtain one or more high-frequency components and one or more low-frequency components of each of the at least two mask images. The processing device 140 may generate a combined mask image by fusing a low-frequency component of one image of the at least two mask images and the high-frequency components of the at least two mask images. Details regarding generating a combined mask image may be found elsewhere in the present disclosure (e.g., the description in connection with FIG. 7). The processing device 140 may designate the combined mask image as the target mask image.

In 1350, the processing device 140 (e.g., the subtracting module 270) may generate a subtracted image based on the target mask image and the contrast image.

In some embodiments, the processing device 140 (e.g. the structure extraction module 220) may extract a plurality of target structures from the target mask image by using one or more preset processing algorithms. The processing device 140 (e.g. the subtracting module 270) may generate the subtracted image by subtracting the plurality of target structures from the contrast image. Details regarding the plurality of target structures and extracting a plurality of target structures using the one or more preset processing algorithms may be found elsewhere in the present disclosure (e.g., the description in connection with FIG. 3).

In some embodiments, the processing device 140 (e.g. the structure extraction module 220) may extract a plurality of candidate target structures from the target mask image by processing the target mask image with the one or more preset processing algorithms. The processing device 140 (e.g. the structure extraction module 220) may determine the plurality of target structures based on the plurality of candidate target structures. Details regarding extracting the plurality of candidate target structures using the one or more preset processing algorithms and determining the plurality of target structures based on the plurality of candidate target structures may be found elsewhere in the present disclosure (e.g., the description in connection with FIG. 4).

In some embodiments, the processing device 140 (e.g. the structure extraction module 220) may determine, from the contrast image, a plurality of structure templates corresponding to the plurality of target structures by using the one or more preset processing algorithms. The processing device 140 (e.g. the structure extraction module 220) may determine, based on the plurality of candidate target structures and the plurality of structure templates, the plurality of target structures, each of the plurality of target structures corresponding to one of the plurality of structure templates. Details regarding determining the plurality of structure templates and determining the plurality of target structures based on the plurality of candidate target structures may be found elsewhere in the present disclosure (e.g., the description in connection with FIG. 5).

In some embodiments, the subtracted image may be generated by subtracting the target mask image from the contrast image.

In some embodiments, before subtracting the target mask image from the contrast image, the processing device 140 (e.g. the image processing module 260) may perform pixel-shifting on the target mask image to match or register the contrast image. The pixel-shifting operation may be based on the rigid registration or the elastic registration. Details regarding the pixel-shifting operation, the rigid registration, and the elastic registration may be found elsewhere in the present disclosure (e.g., the description in connection with FIG. 14).

In some embodiments, the subtracted image may be a blood vessel subtracted image. In some embodiments, the processing device 140 (e.g., the image processing module 260) may post-process the blood vessel subtracted image to obtain the target blood vessel image. The post-processing operation may include noise reduction, motion artifacts reduction, stretching, shirking, enhancement, and so on.

In some embodiments, the processing device 140 may use an S-shaped curve to stretch or shrink the blood vessel subtracted image in different gray ranges. By this operation, the contrast of the blood vessel in the blood vessel subtracted image may be improved and the subtraction effect of the blood vessel subtraction image may be optimized.

In some embodiments, the processing device 140 may stretch the blood vessel subtracted image based on the color look-up curve to obtain the target blood vessel image. The color look-up table curve is also called the LUT curve, which may be used to stretch the image and highlight the blood vessel image. The LUT may be a mapping table of pixel gray values. In some embodiments, the pixel gray values of the blood vessel subtracted image may be transformed, such as threshold, inversion, binarization, contrast adjustment, and linear transformation, to obtain other gray values corresponding to the pixel gray values of the blood vessel subtracted image. The above operations may highlight useful information in the blood vessel subtracted image and enhance the light contrast of the blood vessel subtracted image.

In some embodiments, after performing stretching on the blood vessel subtracted image, the processing device 140 may perform enhancement on the stretched blood vessel subtracted image and determine the enhanced blood vessel subtracted image as the target blood vessel image. Image enhancement may be a method of using an image pyramid to interpret images with multi-resolution. The image pyramid may include the Gaussian pyramid and the Laplacian pyramid. The image pyramid may be used to improve the display quality of the image for information extraction and recognition. In some embodiments, the image pyramid may be used to remove unnecessary or interfering information and highlight the required information to facilitate image analysis and interpretation or further processing.

In some embodiments, compared with providing only one mask image to obtain the subtracted image, at least two mask images in the present disclosure provides more mask image alternatives. In some embodiments, by taking the at least one candidate mask image corresponding to heartbeat status that is the same as or substantially similar to the heartbeat status of the object corresponding to the contrast image as the mask image to be selected, the influence of motion artifacts in the mask image and the contrast image caused by the heart beating on the subtraction effect may be effectively reduced and considering the periodic characteristics of heart beating. In some embodiments, determining the target mask image corresponding to the contrast image based on the mask image to be selected may ensure the matching between the target mask image and the contrast image. In some embodiments, determining the blood vessel subtracted image according to the contrast image and the target mask image may have the advantages of the low cost of computation and fast processing speed, and may effectively improve the imaging quality of the blood vessel subtracted image.

FIG. 14 is a flowchart illustrating an exemplary process for generating a subtracted image by subtracting a pixel-shifted mask image from a contrast image according to some embodiments of the present disclosure. In some embodiments, the process 1400 may be implemented in the imaging system 100 illustrated in FIG. 1. For example, the process 1400 may be stored in a storage medium (e.g., the storage device 150) as a form of instructions, and can be invoked and/or executed by the processing device 140 (e.g., one or more modules in the processing device 200 illustrated in FIG. 2). The operations of the illustrated process 1400 presented below are intended to be illustrative. In some embodiments, the process 1400 may be accomplished with one or more additional operations not described, and/or without one or more of the operations discussed.

In 1410, the processing device 140 (e.g., the image obtaining module 210) may obtain a mask image of an object and a contrast image of the object.

In some embodiments, the mask image may be a combined mask image. In some embodiments, the mask image may be a simulated mask image. In some embodiments, the mask image may be a real mask image. Details regarding the contrast image and the mask image may be found elsewhere in the present disclosure (e.g., the description in connection with FIGs. 3 and 7).

In 1420, the processing device 140 (e.g., the image processing module 260) may perform pixel-shifting on the mask image to match the contrast image. The pixel-shifting operation may be performed based on the rigid registration, the elastic registration, and so on.

The rigid registration may be a process determining a set of optimal rotation and translation matrices, and aligning one image with the other image based on the set of optimal rotation and translation matrices. In some embodiments, the registration algorithms used to the rigid registration may include ICP (iteration closest point) and its variants, NDT (normal distribution transform), Super4CS, Deep Learning (method based on deep learning), Deep Closest Point, Deep ICP, and so on.

In some embodiments, the processing device 140 may extract respective feature points of the contrast image and the mask image. The processing device 140 may determine a plurality of matching feature point pairs by performing similarity measuring between the contrast image and the mask image. The processing device 140 may determine the space coordinate transformation parameters of the contrast image and the mask image based on the plurality of matching feature point pairs. The processing device 140 may performing the rigid registration on the mask image according to the space coordinate transformation parameters by pixel-shifting.

In some embodiments, the processing device 140 may determine feature points on the mask image and the contrast image. The feature points on the mask image may correspond to the feature points on the contrast image. In some embodiments, the feature points may include one or more anatomical feature points (e.g., a point at the edge of a blood vessel, a bifurcation of a blood vessel branch, and so on). In some embodiments, the processing device 140 may divide the mask image and the contrast image into a plurality of blocks, for example, 6 * 9 blocks. For each of the plurality of blocks, the feature points may include a center point of the block and one or more points on frames of the block.

In some embodiments, the processing device 140 may use the above feature points as control points to match the mask image with the contrast image. In the matching process, the processing device 140 may obtain the displacements of the control points, and obtain the displacement of each pixel point on the mask image based on the displacements of the control points. In some embodiments, the processing device 140 may distort the entire mask image by performing an affine transformation based on the displacements of the control points, so that the entire mask image may be pixel-shifted. The number of feature points or control points is positively correlated with the accuracy of the matching between the mask image and the simulated-used contrast image. The cost of computation may grow with the increase of the number of feature points or control points. The number of feature points or control points may be determined according to the accuracy demand and the cost of computation.

In some embodiments, the processing device 140 may use other pixel-shifting methods to perform pixel-shifting on the mask image to match the simulated-used contrast image, for example, a pixel-shifting model.

In some embodiments, the processing device 140 may perform pixel-shifting on the target structure (or the combined candidate target structure) to match the structure template in a similar way before subtracting the target structure from the contrast image.

In some embodiments, some organs (refered to first organs) in the human body may basically not deform within a certain image acquisition time interval, such as the brain and spine, and some organs (refered to first organs) in the human body may move autonomously within the corresponding time interval, resulting in distortion, such as lungs and hearts, which may make the images of the organs acquired at different times, whether contrast images or mask images, different in shape, size and other aspects. Therefore, different registration methods may be selected for medical images of different organs or different target structures. In some embodiments, the processing device 140 may determine registration method consistent with the characteristics of the organ or the target structure to perform pixel-shifting on the image of the organ or the target structure. In some embodiments, the processing device 140 may perform pixel-shifting on the image of the first organs or the target structure corresponding to the first organs based on the rigid registration. In some embodiments, the processing device 140 may perform pixel-shifting on the image of the second organs or the target structure corresponding to the second organs based on the elastic registration.

In 1430, the processing device 140 (e.g., the subtracting module 270) may generate a subtracted image by subtracting the pixel-shifted mask image from the contrast image. Details regarding generating the subtracted image may be found elsewhere in the present disclosure (e.g., the description in connection with FIGs. 7 and 13).

It should be noted that the above description is merely provided for the purposes of illustration, and not intended to limit the scope of the present disclosure. For persons having ordinary skills in the art, multiple variations and modifications may be made under the teachings of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A computer-implemented method for digital subtraction angiography, comprising:
obtaining a contrast image of an object and at least one mask image of the object, the contrast image of the object being a medical contrast image of the object obtained using a contrast agent, and the at least one mask image being a medical image that is obtained by scanning the object before receiving the contrast agent;
extracting a plurality of target structures from the at least one mask image by using one or more preset processing algorithms, the one or more preset processing algorithms include at least one of a brightness-based structure extraction algorithm, a grayscale-based structure extraction algorithm, a gradient-based structure extraction algorithm, and a motion detection-based structure extraction algorithm, each of the plurality of target structures corresponding to a part of the contrast image; and
generating a subtracted image by subtracting the plurality of target structures from the contrast image.

2. The method of claim 1, wherein the extracting a plurality of target structures from the at least one mask image by using one or more preset processing algorithms includes:
extracting a plurality of candidate target structures from the at least one mask image by processing the at least one mask image with the one or more preset processing algorithms; and
determining the plurality of target structures based on the plurality of candidate target structures.

3. The method of claim 2, wherein the extracting a plurality of candidate target structures from the at least one mask image by processing the at least one mask image with the one or more preset processing algorithms includes:
processing each of the at least one mask image with a different preset processing algorithm from the one or more preset processing algorithms to extract the plurality of candidate target structures.

4. The method of claim 2 or claim 3, wherein the determining the plurality of target structures based on the plurality of candidate target structures includes:
determining, based on the contrast image, a plurality of structure templates corresponding to the plurality of target structures by using the one or more preset processing algorithms; and
determining, based on the plurality of candidate target structures and the plurality of structure templates, the plurality of target structures, each of the plurality of target structures corresponding to one of the plurality of structure templates.

5. The method of claim 4, wherein the determining, based on the plurality of candidate target structures and the plurality of structure templates, the plurality of target structures, each of the plurality of target structures corresponding to one of the plurality of structure templates, includes:
for each of the plurality of structure templates:
selecting, from the plurality of candidate target structures, at least two candidate target structures corresponding to a structure template;
generating a combined candidate target structure by combining the at least two candidate target structures; and
designating the combined candidate target structure as a target structure corresponding to the structure template.

6. The method of claim 5, wherein the generating a combined candidate target structure by combining the at least two candidate target structures includes:
obtaining one or more high-frequency components and one or more low-frequency components of each of the at least two candidate target structures; and
generating the combined candidate target structure by fusing a low-frequency component of one of the at least two candidate target structures and the high-frequency components of the at least two candidate target structures.

7. The method of claim 6, wherein the generating a combined candidate target structure by combining the at least two candidate target structures includes:
performing one or more rounds of decomposition to each of the at least two candidate target structures to generate a high-frequency component and a low-frequency component after each round of decomposition;
obtaining a low-frequency component after the first round of decomposition of a candidate target structure of the at least two candidate target structures, a similarity between the candidate target structure and the structure template being a highest similarity among a plurality of similarities between the plurality of candidate target structures and the structure template;
obtaining high-frequency components of the at least two candidate target structures after the one or more rounds of decomposition;
fusing the high-frequency components of the at least two candidate target structures after the one or more rounds of decomposition to produce a fused high-frequency component; and
generating the combined candidate target structure by fusing the low-frequency component of the candidate target structure and the fused high-frequency component.

8. The method of claim 7, wherein
the one or more rounds of the decomposition include four or five rounds; and
the high-frequency components of the at least two candidate target structures used to generate the fused high-frequency component are generated in the last round of decomposition.

9. The method of any one of claims 5-8, wherein the generating a combined candidate target structure by combining the at least two candidate target structures includes:
determining at least two similarities, each of the at least two similarities being a similarity between the structure template and one of the at least two candidate target structures;
determining, based on the at least two similarities, at least two weights corresponding to the at least two candidate target structures; and
determining the combined candidate target structure corresponding to the structure template by combining the plurality of corresponding candidate target structures based on the plurality of weights.

10. The method of any one of claims 1-9, wherein
the plurality of target structures include at least one movement structure and at least one non-movement structure; or
the plurality of target structures include a plurality of movement structures of different movement types.

11. The method of any one of claims 1-10, further comprising:
determining a heartbeat status of the object corresponding to each of a plurality of mask images and a heartbeat status of the object corresponding to the contrast image; and
selecting, from the plurality of mask images, the at least one mask image corresponding to heartbeat status that is the same as or substantially similar to the heartbeat status of the object corresponding to the contrast image.

12. The method of claim 11, wherein the selecting, from the plurality of mask images, the at least one mask image corresponding to heartbeat status that is the same as or substantially similar to the heartbeat status of the object corresponding to the contrast image includes:
determining image acquisition frequencies of the plurality of mask images and the contrast image and a cardiac cycle of the object; and
selecting, from the plurality of mask images, based on the image acquisition frequencies of the plurality of mask images and the contrast image and a cardiac cycle of the object, the at least one mask image corresponding to heartbeat status that is the same as or substantially similar to the heartbeat status of the object corresponding to the contrast image.

13. The method of any one of claims 1-12, further comprising:
determining a plurality of similarities, each of the plurality of similarities being a similarity between the contrast image and one of the plurality of mask images; and
selecting, from the plurality of mask images, the at least one mask image based on the plurality of similarities.

14. A data processing system for digital subtraction angiography, comprising:
at least one storage device including a set of instructions; and
at least one processor configured to communicate with the at least one storage device, wherein, when the instructions are executed, the at least one processor is configured to instruct the system to perform operations, including:
obtaining a contrast image of an object and at least one mask image of the object, the contrast image of the object being a medical contrast image of the object obtained using a contrast agent, and the at least one mask image being a medical image that is obtained by scanning the object before receiving the contrast agent;
extracting a plurality of target structures from the at least one mask image by using one or more preset processing algorithms, the one or more preset processing algorithms include at least one of a brightness-based structure extraction algorithm, a grayscale-based structure extraction algorithm, a gradient-based structure extraction algorithm, and a motion detection-based structure extraction algorithm; each of the plurality of target structures corresponding to a part of the contrast image; and
generating a subtracted image by subtracting the plurality of target structures from the contrast image.

15. A computer-readable non-transitory storage medium comprising instructions which, when executed by a computer, cause the computer to carry out the method of claim 1.

## Patentansprüche

1. Computerimplementiertes Verfahren zur digitalen Subtraktionsangiographie, umfassend:
Erhalten eines Kontrastbildes eines Objekts und mindestens eines Maskenbildes des Objekts, wobei das Kontrastbild des Objekts ein medizinisches Kontrastbild des Objekts ist, das unter Verwendung eines Kontrastmittels erhalten wurde, und das mindestens eine Maskenbild ein medizinisches Bild ist, das durch Scannen des Objekts vor Erhalt des Kontrastmittels erhalten wurde;
Extrahieren einer Vielzahl von Zielstrukturen aus dem mindestens einen Maskenbild unter Verwendung eines oder mehrerer voreingestellter Verarbeitungsalgorithmen, wobei der eine oder die mehreren voreingestellten Verarbeitungsalgorithmen mindestens eines einschließen von einem helligkeitsbasierten Strukturextraktionsalgorithmus, einem graustufenbasierten Strukturextraktionsalgorithmus, einem gradientenbasierten Strukturextraktionsalgorithmus und einem bewegungserkennungsbasierten Strukturextraktionsalgorithmus, wobei jede der Vielzahl von Zielstrukturen einem Teil des Kontrastbildes entspricht; und
Erzeugen eines Subtraktionsbildes durch Subtrahieren der Vielzahl von Zielstrukturen von dem Kontrastbild.

2. Verfahren nach Anspruch 1, wobei das Extrahieren einer Vielzahl von Zielstrukturen aus dem mindestens einen Maskenbild durch Verwenden eines oder mehrerer voreingestellter Verarbeitungsalgorithmen Folgendes einschließt:
Extrahieren einer Vielzahl von Kandidatenzielstrukturen aus dem mindestens einen Maskenbild durch Verarbeiten des mindestens einen Maskenbildes mit dem einen oder den mehreren voreingestellten Verarbeitungsalgorithmen; und
Bestimmen der Vielzahl von Zielstrukturen basierend auf der Vielzahl von Kandidatenzielstrukturen.

3. Verfahren nach Anspruch 2, wobei das Extrahieren einer Vielzahl von Kandidatenzielstrukturen aus dem mindestens einen Maskenbild durch Verarbeiten des mindestens einen Maskenbildes mit dem einen oder den mehreren voreingestellten Verarbeitungsalgorithmen einschließt:
Verarbeiten von jedem des mindestens einen Maskenbildes mit einem unterschiedlichen voreingestellten Verarbeitungsalgorithmus aus dem einen oder den mehreren voreingestellten Verarbeitungsalgorithmen, um die Vielzahl von Kandidatenzielstrukturen zu extrahieren.

4. Verfahren nach Anspruch 2 oder Anspruch 3, wobei das Bestimmen der Vielzahl von Zielstrukturen basierend auf der Vielzahl von Kandidatenzielstrukturen Folgendes einschließt:
Bestimmen, basierend auf dem Kontrastbild, einer Vielzahl von Strukturvorlagen, die der Vielzahl von Zielstrukturen entsprechen, durch Verwenden des einen oder der mehreren voreingestellten Verarbeitungsalgorithmen; und
Bestimmen, basierend auf der Vielzahl von Kandidatenzielstrukturen und der Vielzahl von Strukturvorlagen, der Vielzahl von Zielstrukturen, wobei jede der Vielzahl von Zielstrukturen einer der Vielzahl von Strukturvorlagen entspricht.

5. Verfahren nach Anspruch 4, wobei das Bestimmen der Vielzahl von Zielstrukturen basierend auf der Vielzahl von Kandidatenzielstrukturen und der Vielzahl von Strukturvorlagen, wobei jede der Vielzahl von Zielstrukturen einer der Vielzahl von Strukturvorlagen entspricht, Folgendes einschließt:
für jede der Vielzahl von Strukturvorlagen:
Auswählen, aus der Vielzahl von Kandidatenzielstrukturen, von mindestens zwei Kandidatenzielstrukturen, die einer Strukturvorlage entsprechen;
Erzeugen einer kombinierten Kandidatenzielstruktur durch Kombinieren der mindestens zwei Kandidatenzielstrukturen; und
Bezeichnen der kombinierten Kandidatenzielstruktur als eine Zielstruktur, die der Strukturvorlage entspricht.

6. Verfahren nach Anspruch 5, wobei das Erzeugen einer kombinierten Kandidatenzielstruktur durch Kombinieren der mindestens zwei Kandidatenzielstrukturen Folgendes einschließt:
Erhalten einer oder mehrerer Hochfrequenzkomponenten und einer oder mehrerer Niederfrequenzkomponenten von jeder der mindestens zwei Kandidatenzielstrukturen; und
Erzeugen der kombinierten Kandidatenzielstruktur durch Verschmelzen einer Niederfrequenzkomponente einer der mindestens zwei Kandidatenzielstrukturen und der Hochfrequenzkomponenten der mindestens zwei Kandidatenzielstrukturen.

7. Verfahren nach Anspruch 6, wobei das Erzeugen einer kombinierten Kandidatenzielstruktur durch Kombinieren der mindestens zwei Kandidatenzielstrukturen Folgendes einschließt:
Durchführen einer oder mehrerer Zerlegungsrunden für jede der mindestens zwei Kandidatenzielstrukturen, um nach jeder Zerlegungsrunde eine Hochfrequenzkomponente und eine Niederfrequenzkomponente zu erzeugen;
Erhalten einer Niederfrequenzkomponente nach der ersten Zerlegungsrunde einer Kandidatenzielstruktur der mindestens zwei Kandidatenzielstrukturen, wobei eine Ähnlichkeit zwischen der Kandidatenzielstruktur und der Strukturvorlage eine höchste Ähnlichkeit unter einer Vielzahl von Ähnlichkeiten zwischen der Vielzahl von Kandidatenzielstrukturen und der Strukturvorlage ist;
Erhalten von Hochfrequenzkomponenten der mindestens zwei Kandidatenzielstrukturen nach der einen oder den mehreren Zerlegungsrunden;
Verschmelzen der Hochfrequenzkomponenten der mindestens zwei Kandidatenzielstrukturen nach der einen oder den mehreren Zerlegungsrunden, um eine verschmolzene Hochfrequenzkomponente zu erzeugen; und
Erzeugen der kombinierten Kandidatenzielstruktur durch Verschmelzen der Niederfrequenzkomponente der Kandidatenzielstruktur und der verschmolzenen Hochfrequenzkomponente.

8. Verfahren nach Anspruch 7, wobei
die eine oder mehreren Zerlegungsrunden vier oder fünf Runden einschließen; und
die Hochfrequenzkomponenten der mindestens zwei Kandidatenzielstrukturen, die zum Erzeugen der verschmolzenen Hochfrequenzkomponente verwendet werden, in der letzten Zerlegungsrunde erzeugt werden.

9. Verfahren nach einem der Ansprüche 5-8, wobei das Erzeugen einer kombinierten Kandidatenzielstruktur durch Kombinieren der mindestens zwei Kandidatenzielstrukturen Folgendes einschließt:
Bestimmen von mindestens zwei Ähnlichkeiten, wobei jede der mindestens zwei Ähnlichkeiten eine Ähnlichkeit zwischen der Strukturvorlage und einer der mindestens zwei Kandidatenzielstrukturen ist;
Bestimmen von mindestens zwei Gewichten, die den mindestens zwei Kandidatenzielstrukturen entsprechen, basierend auf den mindestens zwei Ähnlichkeiten; und
Bestimmen der kombinierten Kandidatenzielstruktur, die der Strukturvorlage entspricht, durch Kombinieren der Vielzahl von entsprechenden Kandidatenzielstrukturen basierend auf der Vielzahl von Gewichten.

10. Verfahren nach einem der Ansprüche 1-9, wobei
die Vielzahl von Zielstrukturen mindestens eine Bewegungsstruktur und mindestens eine Nicht-Bewegungsstruktur einschließt; oder
die Vielzahl von Zielstrukturen eine Vielzahl von Bewegungsstrukturen unterschiedlicher Bewegungsarten einschließt.

11. Verfahren nach einem der Ansprüche 1-10, weiter umfassend:
Bestimmen eines Herzschlagstatus des Objekts, der jedem einer Vielzahl von Maskenbildern entspricht, und eines Herzschlagstatus des Objekts, der dem Kontrastbild entspricht; und
Auswählen, aus der Vielzahl von Maskenbildern, des mindestens einen Maskenbildes, das dem Herzschlagstatus entspricht, der gleich oder im Wesentlichen ähnlich ist wie der Herzschlagstatus des Objekts, der dem Kontrastbild entspricht.

12. Verfahren nach Anspruch 11, wobei das Auswählen, aus der Vielzahl von Maskenbildern, des mindestens einen Maskenbildes, das einem Herzschlagstatus entspricht, der gleich oder im Wesentlichen ähnlich ist wie der Herzschlagstatus des Objekts, der dem Kontrastbild entspricht, Folgendes einschließt:
Bestimmen von Bildaufnahmefrequenzen der Vielzahl von Maskenbildern und des Kontrastbildes und eines Herzzyklus des Objekts; und
Auswählen, aus der Vielzahl von Maskenbildern, basierend auf den Bildaufnahmefrequenzen der Vielzahl von Maskenbildern und dem Kontrastbild und einem Herzzyklus des Objekts, des mindestens einen Maskenbildes, wobei das mindestens eine Maskenbild einem Herzschlagstatus entspricht, der gleich oder im Wesentlichen ähnlich ist wie der Herzschlagstatus des Objekts, der dem Kontrastbild entspricht.

13. Verfahren nach einem der Ansprüche 1-12, weiter umfassend:
Bestimmen einer Vielzahl von Ähnlichkeiten, wobei jede der Vielzahl von Ähnlichkeiten eine Ähnlichkeit zwischen dem Kontrastbild und einem der Vielzahl von Maskenbildern ist; und
Auswählen des mindestens einen Maskenbildes aus der Vielzahl von Maskenbildern basierend auf der Vielzahl von Ähnlichkeiten.

14. Datenverarbeitungssystem für die digitale Subtraktionsangiographie, umfassend:
mindestens eine Speichervorrichtung, die einen Satz von Anweisungen einschließt; und
mindestens einen Prozessor, der so konfiguriert ist, dass er mit der mindestens einen Speichervorrichtung kommuniziert, wobei, wenn die Anweisungen ausgeführt werden, der mindestens eine Prozessor so konfiguriert ist, dass er das System anweist, Operationen durchzuführen, die Folgendes einschießen:
Erhalten eines Kontrastbildes eines Objekts und mindestens eines Maskenbildes des Objekts, wobei das Kontrastbild des Objekts ein medizinisches Kontrastbild des Objekts ist, das unter Verwendung eines Kontrastmittels erhalten wurde, und das mindestens eine Maskenbild ein medizinisches Bild ist, das durch Scannen des Objekts vor Erhalt des Kontrastmittels erhalten wurde;
Extrahieren einer Vielzahl von Zielstrukturen aus dem mindestens einen Maskenbild unter Verwendung eines oder mehrerer voreingestellter Verarbeitungsalgorithmen, wobei der eine oder die mehreren voreingestellten Verarbeitungsalgorithmen mindestens eines einschließen von einem helligkeitsbasierten Strukturextraktionsalgorithmus, einem graustufenbasierten Strukturextraktionsalgorithmus, einem gradientenbasierten Strukturextraktionsalgorithmus und einem bewegungserkennungsbasierten Strukturextraktionsalgorithmus; wobei jede der Vielzahl von Zielstrukturen einem Teil des Kontrastbildes entspricht; und
Erzeugen eines Subtraktionsbildes durch Subtrahieren der Vielzahl von Zielstrukturen von dem Kontrastbild.

15. Computerlesbares nichtflüchtiges Speichermedium, das Anweisungen umfasst, die, wenn sie von einem Computer ausgeführt werden, bewirken, dass der Computer das Verfahren nach Anspruch 1 durchführt.

## Revendications

1. Procédé mis en œuvre par ordinateur pour l'angiographie par soustraction numérique, comprenant les étapes consistant à :
obtenir une image de contraste d'un objet et au moins une image de masque de l'objet, l'image de contraste de l'objet étant une image de contraste médicale de l'objet obtenue en utilisant un agent de contraste, et la au moins une image de masque étant une image médicale qui est obtenue en balayant l'objet avant de recevoir l'agent de contraste ;
extraire une pluralité de structures cibles à partir de la au moins une image de masque en utilisant un ou plusieurs algorithmes de traitement prédéfinis, les un ou plusieurs algorithmes de traitement prédéfinis incluent au moins l'un parmi un algorithme d'extraction de structure basé sur la luminosité, un algorithme d'extraction de structure basé sur les niveaux de gris, un algorithme d'extraction de structure basé sur le gradient et un algorithme d'extraction de structure basé sur la détection de mouvement, chacune de la pluralité de structures cibles correspondant à une partie de l'image de contraste ; et
générer une image soustraite en soustrayant la pluralité de structures cibles de l'image de contraste.

2. Procédé selon la revendication 1, dans lequel l'extraction d'une pluralité de structures cibles à partir de la au moins une image de masque en utilisant un ou plusieurs algorithmes de traitement prédéfinis inclut les étapes consistant à :
extraire une pluralité de structures cibles candidates à partir de la au moins une image de masque en traitant la au moins une image de masque avec les un ou plusieurs algorithmes de traitement prédéfinis ; et
déterminer la pluralité de structures cibles sur la base de la pluralité de structures cibles candidates.

3. Procédé selon la revendication 2, dans lequel l'extraction d'une pluralité de structures cibles candidates à partir de la au moins une image de masque en traitant la au moins une image de masque avec les un ou plusieurs algorithmes de traitement prédéfinis inclut l'étape consistant à :
traiter chacune de la au moins une image de masque avec un algorithme de traitement prédéfini différent des un ou plusieurs algorithmes de traitement prédéfinis pour extraire la pluralité de structures cibles candidates.

4. Procédé selon la revendication 2 ou la revendication 3, dans lequel la détermination de la pluralité de structures cibles sur la base de la pluralité de structures cibles candidates inclut les étapes consistant à :
déterminer, sur la base de l'image de contraste, une pluralité de modèles de structure correspondant à la pluralité de structures cibles en utilisant les un ou plusieurs algorithmes de traitement prédéfinis ; et
déterminer, sur la base de la pluralité de structures cibles candidates et de la pluralité de modèles de structure, la pluralité de structures cibles, chacune de la pluralité de structures cibles correspondant à un de la pluralité de modèles de structure.

5. Procédé selon la revendication 4, dans lequel la détermination, sur la base de la pluralité de structures cibles candidates et de la pluralité de modèles de structure, de la pluralité de structures cibles, chacune de la pluralité de structures cibles correspondant à un de la pluralité de modèles de structure, inclut les étapes consistant à :
pour chacun de la pluralité de modèles de structure :
sélectionner, à partir de la pluralité de structures cibles candidates, au moins deux structures cibles candidates correspondant à un modèle de structure ;
générer une structure cible candidate combinée en combinant les au moins deux structures cibles candidates ; et
désigner la structure cible candidate combinée comme une structure cible correspondant au modèle de structure.

6. Procédé selon la revendication 5, dans lequel la génération d'une structure cible candidate combinée en combinant les au moins deux structures cibles candidates inclut les étapes consistant à :
obtenir une ou plusieurs composantes haute fréquence et une ou plusieurs composantes basse fréquence de chacune des au moins deux structures cibles candidates ; et
générer la structure cible candidate combinée en fusionnant une composante basse fréquence d'une des au moins deux structures cibles candidates et les composantes haute fréquence des au moins deux structures cibles candidates.

7. Procédé selon la revendication 6, dans lequel la génération d'une structure cible candidate combinée en combinant les au moins deux structures cibles candidates inclut les étapes consistant à :
effectuer un ou plusieurs cycles de décomposition sur chacune des au moins deux structures cibles candidates pour générer une composante haute fréquence et une composante basse fréquence après chaque cycle de décomposition ;
obtenir une composante basse fréquence après le premier cycle de décomposition d'une structure cible candidate des au moins deux structures cibles candidates, une similarité entre la structure cible candidate et le modèle de structure étant une similarité la plus élevée parmi une pluralité de similarités entre la pluralité de structures cibles candidates et le modèle de structure ;
obtenir des composantes haute fréquence des au moins deux structures cibles candidates après les un ou plusieurs cycles de décomposition ;
fusionner les composantes haute fréquence des au moins deux structures cibles candidates après les un ou plusieurs cycles de décomposition pour produire une composante haute fréquence fusionnée ; et
générer la structure cible candidate combinée en fusionnant la composante basse fréquence de la structure cible candidate et la composante haute fréquence fusionnée.

8. Procédé selon la revendication 7, dans lequel
les un ou plusieurs cycles de la décomposition incluent quatre ou cinq cycles ; et
les composantes haute fréquence des au moins deux structures cibles candidates utilisées pour générer la composante haute fréquence fusionnée sont générées dans le dernier cycle de décomposition.

9. Procédé selon l'une quelconque des revendications 5-8, dans lequel la génération d'une structure cible candidate combinée en combinant les au moins deux structures cibles candidates inclut les étapes consistant à :
déterminer au moins deux similarités, chacune des au moins deux similarités étant une similarité entre le modèle de structure et une des au moins deux structures cibles candidates ;
déterminer, sur la base des au moins deux similarités, au moins deux poids correspondant aux au moins deux structures cibles candidates ; et
déterminer la structure cible candidate combinée correspondant au modèle de structure en combinant la pluralité de structures cibles candidates correspondantes sur la base de la pluralité de poids.

10. Procédé selon l'une quelconque des revendications 1-9, dans lequel
la pluralité de structures cibles inclut au moins une structure de mouvement et au moins une structure de non-mouvement ; ou
la pluralité de structures cibles inclut une pluralité de structures de mouvement de différents types de mouvement.

11. Procédé selon l'une quelconque des revendications 1-10, comprenant en outre les étapes consistant à :
déterminer un statut de battement cardiaque de l'objet correspondant à chacune d'une pluralité d'images de masque et un statut de battement de cœur de l'objet correspondant à l'image de contraste ; et
sélectionner, à partir de la pluralité d'images de masque, la au moins une image de masque correspondant au statut de battement de cœur qui est identique ou sensiblement similaire au statut de battement de cœur de l'objet correspondant à l'image de contraste.

12. Procédé selon la revendication 11, dans lequel la sélection, à partir de la pluralité d'images de masque, de la au moins une image de masque correspondant au statut de battement de cœur qui est identique ou sensiblement similaire au statut de battement de cœur de l'objet correspondant à l'image de contraste inclut les étapes consistant à :
déterminer des fréquences d'acquisition d'image de la pluralité d'images de masque et de l'image de contraste et un cycle cardiaque de l'objet ; et
sélectionner, à partir de la pluralité d'images de masque, sur la base des fréquences d'acquisition d'image de la pluralité d'images de masque et de l'image de contraste et d'un cycle cardiaque de l'objet, la au moins une image de masque correspondant au statut de battement cardiaque qui est identique ou sensiblement similaire au statut de battement cardiaque de l'objet correspondant à l'image de contraste.

13. Procédé selon l'une quelconque des revendications 1-12, comprenant en outre les étapes consistant à :
déterminer une pluralité de similarités, chacune de la pluralité de similarités étant une similarité entre l'image de contraste et une de la pluralité d'images de masque ; et
sélectionner, à partir de la pluralité d'images de masque, la au moins une image de masque sur la base de la pluralité de similarités.

14. Système de traitement de données pour l'angiographie par soustraction numérique, comprenant :
au moins un dispositif de stockage incluant un ensemble d'instructions ; et
au moins un processeur configuré pour communiquer avec le au moins un dispositif de stockage, dans lequel, lorsque les instructions sont exécutées, le au moins un processeur est configuré pour ordonner au système de mettre en œuvre des opérations incluant les étapes consistant à :
obtenir une image de contraste d'un objet et au moins une image de masque de l'objet, l'image de contraste de l'objet étant une image de contraste médicale de l'objet obtenue en utilisant un agent de contraste, et la au moins une image de masque étant une image médicale qui est obtenue en balayant l'objet avant de recevoir l'agent de contraste ;
extraire une pluralité de structures cibles à partir de la au moins une image de masque en utilisant un ou plusieurs algorithmes de traitement prédéfinis, les un ou plusieurs algorithmes de traitement prédéfinis incluent au moins l'un parmi un algorithme d'extraction de structure basé sur la luminosité, un algorithme d'extraction de structure basé sur les niveaux de gris, un algorithme d'extraction de structure basé sur le gradient et un algorithme d'extraction de structure basé sur la détection de mouvement, chacune de la pluralité de structures cibles correspondant à une partie de l'image de contraste ; et
générer une image soustraite en soustrayant la pluralité de structures cibles de l'image de contraste.

15. Support de stockage non transitoire lisible par ordinateur comprenant des instructions qui, lorsqu'elles sont exécutées par un ordinateur, amènent l'ordinateur à mettre en œuvre le procédé selon la revendication 1.
